(19) Europäisches Patentamt
European Patent Office
Office européen des brevets

(11) EP 2 417 179 B1

(12) **EUROPEAN PATENT SPECIFICATION**

(45) Date of publication and mention of the grant of the patent:
**02.07.2014 Bulletin 2014/27**

(21) Application number: **10712306.9**

(22) Date of filing: **06.04.2010**

(51) Int Cl.:
***C08L 67/04*** *(2006.01)*

(86) International application number:
**PCT/US2010/030111**

(87) International publication number:
**WO 2010/118041 (14.10.2010 Gazette 2010/41)**

# (54) METHOD OF IMPROVING FILM PROCESSING AND INJECTION MOLDING OF POLYHYDROXYALKANOATE POLYMERS

VERFAHREN ZUR VERBESSERUNG DER FILMHERSTELLUNG UND DES SPRITZGUSSVERFAHRENS VON POLYHYDROXYALKANOAT-POLYMEREN

PROCÉDÉ POUR AMÉLIORER LA PRODUCTION DES FILMS ET DE LA TECHNIQUE DE MOULAGE PAR INJECTION À BASE DE POLYHYDROXYALKANOATES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.04.2009 US 166950 P**

(43) Date of publication of application:
**15.02.2012 Bulletin 2012/07**

(73) Proprietor: **METABOLIX, INC.**
**Cambridge, MA 02139 (US)**

(72) Inventor: **KRISHNASWAMY, Rajendra, K.**
**Lexington**
**MA 02420 (US)**

(74) Representative: **Potter Clarkson LLP**
**The Belgrave Centre**
**Talbot Street**
**Nottingham, NG1 5GG (GB)**

(56) References cited:
**WO-A1-2008/027046 WO-A2-2009/077860**
**WO-A2-2010/014630 US-A1- 2007 203 283**

- **XIA Z ET AL: "The reinforcement of poly(lactic acid) using high aspect ratio calcium carbonate based mineral additive" PLASTICS ENCOUNTER AT ANTEC 2007,, vol. 3, 1 January 2007 (2007-01-01), pages 1549-1553, XP009119452**
- **NATUREWORKS: "Technology Focus Report: Polylactic Acid Containing Fillers and Fibers*" INTERNET CITATION 19 September 2007 (2007-09-19), pages 1-5, XP002535253 Retrieved from the Internet: URL:http: //www.natureworksllc.com/product- and-applications/ingeo-biopolym er/technical-publications/~/media/Files/Fi llers-and-Fibers-Technology Report-pdf.ashx [retrieved on 2009-07-03]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 417 179 B1

## Description

### RELATED APPLICATION

This application claims the benefit of U.S. Provisional Application No. 61/166,950, filed on April 6, 2009.

### BACKGROUND

Biodegradable plastics are of increasing industrial interest as replacements or supplements for non-biodegradable plastics in a wide range of applications and in particular for packaging applications. One class of biodegradable polymers is the polyhydroxyalkanoates (PHAs). These polymers are synthesized by soil microbes for use as intracellular storage material. Articles made from the polymers are generally recognized by soil microbes as a food source. There has therefore been a great deal of interest in the commercial development of these polymers, particularly for disposable consumer items. To date, however, PHAs have seen limited commercial availability, with only the copolymer poly(3-hydroxybutyrate-co-3-hydroxyvalerate) (PHBV) being available in development quantities.

Although various PHAs are capable of being processed on conventional processing equipment, problems have been found with these polymers that have limited their commercial applications. One of the primary challenges associated with PHAs is their limited processing window. This is attributable to their inherently poor thermal stability and relatively slow crystallization kinetics. PHAs begin to undergo chain scission reactions as soon as they are molten; this results in a lowering of the molecular weight during the melt-processing of PHAs. The concentration at which this molecular weight reduction occurs is referred to as thermal stability, with a higher concentration of molecular weight loss translating to poorer thermal stability. The thermal stability of PHAs is sensitive to even small amounts of impurities in the product formulation, which means extreme care needs to be exercised while choosing to add even simple mineral fillers to PHAs. Further, the relatively slow crystallization kinetics of PHAs generally result in long cycle times and excessive flash during injection molding and limited line speeds (from roll-sticking and drawdown stability) in film processing. Thus, a need exists to address these shortcomings.

### SUMMARY

Disclosed herein are methods for producing polyhydroxyalkanoate articles by combining a polyhydroxyalkanoate polymer article formulation as claimed and a high purity calcium carbonate and producing a polyhydroxyalkanoate article as claimed containing high purity calcium carbonate; compositions containing polyhydroxyalkanoate polymers and calcium carbonate as claimed, methods for making such compositions, pellets containing polyhydroxyalkanoate polymers and high purity calcium carbonate as claimed, and methods for making such pellets.

The high purity calcium carbonate has the following characteristics; an average particle size of less than or equal to about three microns; a total trace metal content of less than about 5000 ppm; a magnesium content of less than about 2500 ppm; and an iron content of less than about 500 ppm.

In particular embodiments of the methods, compositions and pellets described herein, the high purity calcium carbonate is selected from EMFORCE Bio® calcium carbonate, MULTIFLEX-MM® calcium carbonate, THIXO-CARB® calcium carbonate, and ULTRA-PFLEX® calcium carbonate.

In certain embodiments described herein, the processes and compositions have one or more advantages. These advantages include a broader processing window, for example, improved mechanical and rheological properties of the resulting polymers and compositions and articles made from the formulations, the ability to achieve higher line speed during film processing, decreased cycle time and reduced flash during injection molding.

In other embodiments, the article is a film, a sheet, a fiber, an injection molded article, a thermoformed article, a blow molded article or a foamed article.

In yet other embodiments, improvements, processes, compositions and pellets can also include blends of PHAs as claimed, blends of PHAs as claimed and biodegradable aromatic-aliphatic polyesters, blends of PHAs as claimed with other aliphatic polyesters, which have improved processing, physical and/or economic characteristics.

The article can be a film, a sheet, fiber, foam, an injection molding, a thermoform, or a blow molding.

In the methods described herein, the calcium carbonate is added at a concentration of about 3% to about 50% by weight of the polyhydroxyalkanoate polymer article formulation, at a concentration of about 3% to about 40% by weight of the polyhydroxyalkanoate polymer article formulation, at a concentration of about 5% to about 40% by weight of the polyhydroxyalkanoate polymer article formulation at a concentration of about 5% to about 20% by weight, about 5% by weight, or about 10% by weight of the polyhydroxyalkanoate polymer article formulation, or about 15% by weight of the polyhydroxyalkanoate polymer article formulation, or about 20% by weight of the polyhydroxyalkanoate polymer article formulation, or about 25 % by weight of the polyhydroxyalkanoate polymer article formulation, or about 30% by weight of the polyhydroxyalkanoate polymer article formulation, or about 35% by weight of the polyhydroxyalkanoate

polymer article formulation, or about 40% by weight of the polyhydroxyalkanoate polymer article formulation, at a concentration of about 45% by weight of the polyhydroxyalkanoate polymer article formulation and at a concentration of about 50% by weight of the polyhydroxyalkanoate polymer article formulation.

A film, sheet or foamed articles, such as an injection molded article, a thermoformed article or a blown molded article, containing a high purity calcium carbonate as disclosed herein can be made at a higher line speed than when made from a corresponding polyhydroxyalkanoate polymer article formulation without calcium carbonate or with a lower purity calcium carbonate. Thinner films are also possible with polyhydroxyalkanoate polymer article formulation as claimed containing high purity calcium carbonate. A broader processing window than a polyhydroxyalkanoate polymer article formulation containing lower purity calcium carbonate is also possible with the high purity calcium carbonate. For example, the polyhydroxyalkanoate polymer article formulation as claimed containing high purity calcium carbonate has better thermal stability, melt rheology, and other processing characteristics including better handling and the like that are desirable.

Further disclosed herein is a composition comprising: a polyhydroxyalkanoate polymer, and a high purity calcium carbonate as claimed.

Also disclosed is a pellet, comprising: a polyhydroxyalkanoate polymer; and a high purity calcium carbonate as claimed.

The composition, formulations, articles pellets described herein optionally include one or more additives such as a nucleating agent (a nucleant), a plasticizer, a lubricant, a branching agent, a stabilizer, a pigment, an opacifier, a filler, a reinforcing agent, or a mold release agent and the like.

Also disclosed are methods of forming a biodegradable polymeric composition, including: combining: a polyhydroxyalkanoate polymer; as claimed and a calcium carbonate, as claimed under conditions sufficient to form a largely homogeneous composition, thereby forming a biodegradable polymeric composition. The calcium carbonate can be added at a concentration of about 3% to about 50% by weight of the composition, about 3% to about 40% by weight, about 5% by weight, about 10% by weight, about 20% by weight, or about 25% by weight of the composition. The method can additionally include combining one or more additives such as a nucleant, a plasticizer, a lubricant, a branching agent, a stabilizer, a pigment, an opacifier, a filler, a reinforcing agent, or a mold release agent.

In the methods, articles, compositions, or pellets, described herein, the polyhydroxyalkanoate is a poly(3-hydroxybutyrate-co-4-hydroxybutyrate), or a poly(3-hydroxybutyrate-co-4-hydroxybutyrate) with 5% to 15% 4-hydroxybutyrate content.

In other embodiments of the invention, the polyhydroxyalkanoate is a) a poly(3-hydroxybutyrate) homopolymer blended with b) a poly(3-hydroxybutyrate-co-4-hydroxybutyrate); a) a poly(3-hydroxybutyrate-co-4-hydroxybutyrate) blended with b) a poly(3-hydroxybutyrate-co-3-hydroxyvalerate); a) a poly(3-hydroxybutyrate-co-4-hydroxybutyrate) blended with b) a poly(3-hydroxybutyrate-co-3-hydroxyhexanoate) a) a poly(3-hydroxybutyrate) homopolymer blended with b) a poly(3-hydroxybutyrate-co-4-hydroxybutyrate) with a 5% to 15% 4-hydroxybutyrate content; a) a poly(3-hydroxybutyrate-co-4-hydroxybutyrate) with a 5% to 15% 4-hydroxybutyrate content blended with b) a poly(3-hydroxybutyrate-co-3-hydroxyvalerate) with a 5% to 22% 3-hydroxyvalerate content; a) a poly(3-hydroxybutyrate-co-4-hydroxybutyrate) with 5% to 15% 4-hydroxybutyrate content blended with b) a poly(3-hydroxybutyrate-co-3-hydroxyhexanoate) with a 3% to 15% 3-hydroxyhexanoate content; a) a poly(3-hydroxybutyrate) homopolymer blended with b) a poly(3-hydroxybutyrate-co-4-hydroxybutyrate) and the weight of polymer a) is 5% to 95% of the combined weight of polymer a) and polymer b); a) a poly(3-hydroxybutyrate-co-4-hydroxybutyrate) blended with b) a poly(3-hydroxybutyrate-co-3-hydroxyvalerate) and the weight of polymer a) is 5% to 95% of the combined weight of polymer a) and polymer b) or a) a poly(3-hydroxybutyrate-co-4-hydroxybutyrate) blended with b) a poly(3-hydroxybutyrate-co-3-hydroxyhexanoate) and the weight of polymer a) is 5% to 95% of the combined weight of polymer a) and polymer b).

In yet other embodiments, the polyhydroxyalkanoate is wherein the polyhydroxyalkanoate is further blended with polymer c), wherein polymer c) is a poly(3-hydroxybutyrate-co-4-hydroxybutyrate) with a 20% to 50% 4-hydroxybutyrate content.

In other embodiments, the polyhydroxyalkanoate polymer as claimed is blended with one or more polymers which are non-PHA polymers, for example, the PHA is blended with poly butylene succinate (PBS), poly butylene succinate adipate (PBSA), polyvinyl acetate (PVAc) and related polymers, polybutylene adipate terephthalate (PBAT), polylactic acid or polylactide (PLA) and polycaprolactone (PCL). In other embodiments, the additional polymer can be a polyester. The polyester can be a biodegradable aromatic-aliphatic polyester or a biodegradable aliphatic polyester.

In certain embodiments, the polyhydroxyalkanoate polymer as claimed is branched.

In any of the embodiments described herein, the polyhydroxyalkanoate can be branched. For such a branched PHA, the melt elasticity (G') of the branched PHA can be at least about twice the melt elasticity of a corresponding PHA that has not been branched, about three times, about twenty times, fifty time, or even at least about one hundred times or more the melt elasticity of a corresponding PHA that has not been branched. The polydispersity index of the branched PHA can be at least about 2.0, at least about 3.0, 4.0 or at least about 6.0.

A nucleating agent (a nucleant) can also be included in any of the processes, improvements, article, compositions, or pellets as disclosed herein. The nucleating agent can be cyanuric acid, carbon black, mica talc, silica, boron nitride, clay, calcium carbonate, synthesized silicic acid and salts, metal salts of organophosphates, or kaolin. The nucleating agent can include a aluminum hydroxy diphosphate or a compound comprising a nitrogen-containing heteroaromatic core. The nitrogen-containing heteroaromatic core is pyridine, pyrimidine, pyrazine, pyridazine, triazine, or imidazole.

A plasticizer, such as CITROFLEX® A4, can also be included in any of the embodiments described herein.

Other features and advantages of the invention will be apparent from the following detailed description, Examples and from the claims.

## DETAILED DESCRIPTION

The invention pertains to methods of processing polyhydroxyalkanoate polymer formulations as claimed into useful articles, such as films, sheets, injection moldings, thermoforms, fibers and foams. It has been found that particular high purity grades of calcium carbonate are useful in improving mechanical and rheological properties of the polymer formulation articles. For example, these improved properties include increasing the line speed and increasing the processing window of polyhydroxyalkanoate film production while, in contrast to most other forms of calcium carbonate, having few negative effects on film strength, molecular weight, and thermal stability. Similarly, these high grades of calcium carbonate are used, for example, to decrease the cycle time during injection molding of polyhydroxyalkanoate, as claimed and to reduce flash in the resulting molded articles.

The polyhydroxyalkanoate polymer article formulation, as described herein comprises a polyhydroxyalkanoate polymer, as claimed blends and mixtures of polyhydroxyalkanoate polymers as claimed and optionally further comprises, other thermoplastic polymers, non- PHA polymers, plasticizers, nucleating agents, additives, and the like for use in producing and making the articles described herein. In certain embodiments, the polyhydroxyalkanoate polymer is a carrier polymer. A carrier polymer is a polymer included in compositions for dispersing another additive such as a nucleating agent. For example, the carrier polymer is combined with the nucleating agent and a liquid carrier under conditions to form a nucleating pellet. A nucleating pellet is a composition distributed within a base polymer to facilitate crystallization. A base polymer or polyhydroxyalkanoate polymer as used in the methods and compositions of the invention is a polymer used in compositions for making a useful product or article.

In certain embodiments, a base polymer and a carrier polymer is the same polymer. In other embodiments, the base polymer and the carrier polymer are different.

Calcium carbonate has been used as an additive in a wide variety of polymers, generally as a low cost inert filler and sometimes as a nucleating agent. However, its addition can have profoundly negative effects on the properties of polyhydroxyalkanoates. Calcium carbonate has been found to increase the thermal degradation concentration of polyhydroxyalkanoate polymers during processing especially in some applications such as film production. Commonly-seen negative effects include decreased melt strength, reduction of molecular weight and associated lowering of the thermal stability.

Surprisingly, as disclosed herein, it has been found that certain types of high or higher purity calcium carbonate improves the processing of polyhydroxyalkanoate polymers, such as increasing the line speed, decreasing cycle time, and reducing flash, without the negative effects usually associated with the use of calcium carbonate in polyhydroxyalkanoate polymer formulations.

The "high purity calcium carbonate" has a total trace metal content of about 5000 ppm or less. The calcium carbonate has been processed or purified to remove impurities and is thus higher purified than the starting material.

The purified calcium carbonate has an average particle size of less than or equal to about three microns, and a total trace metal content of less than about 5000 ppm, and a magnesium content of less than about 2500 ppm and an iron content of less than about 500 ppm.

In certain embodiments, the total trace metal content of the higher purity calcium carbonate is between 100 ppm and 5000, less than about 4500 ppm, less than about 4000 ppm, less than about 3500, less than about 3000, less than about 2500, or less than about 2000 ppm. In other embodiments, the total trace metal content is found to be a range of about 500 ppm to about 5000 ppm, 1000 ppm to about 5000 ppm, for example, about 1,500 ppm to about 4,500 ppm, or about 2,000 ppm to about 4000 ppm.

In other embodiments, it is preferable to have a low range or particular amount of certain trace metals, such as those described in Table 1, for example, iron, copper, aluminum, titanium, and the like. In these embodiments, the trace metal ranges or amounts of a particular metal impurity are less than about 1,000 ppm, less than about 800 ppm, less than about 700 ppm, less than about 500 ppm, loss than about 400 ppm, less than about 300 ppm, less than about 200 ppm, or less than about less than 100 ppm. In certain embodiments, the trace metal range is 10ppm to about 2500 ppm, 50 ppm to about 1,500 ppm, from about

In other embodiments, the high purity calcium carbonate is produced by further including a step to reduce to total amount of trace metals from the starting calcium carbonate material. This can include a washing step, wet grinding

step or other known purification step or combination of steps to remove or reduce the total trace metal content. In addition, a further step is included to reduce a particular trace metal content that may be causing detrimental effects.

The total trace metal content can be determined by, for example, ICP-MS (inductively coupled plasma mass spectrometry). ICP-MS is a highly sensitive type of quantitative mass spectrometry that can detect metals and some non-metals at levels below one part per trillion.

Examples of high purity calcium carbonates which meet the above trace metal content criteria include calcium carbonates sold under the trade names, EMFORCE® Bio calcium carbonate and MULTIFLEX-MM® calcium carbonate, THIXO-CARB® calcium carbonate, and ULTRA-PFLEX® calcium carbonate (available from Specialty Minerals Inc., Bethlehem, PA, USA). Unexpectedly, it has been found that such high purity calcium carbonates, improved the thermal stability of polyhydroxyalkanoate polymers described herein.

Mineral fillers are very commonly used in plastics compounds, and they are often added to impart certain functional features and in many instances to lower cost. Calcium carbonate, talc, clay and mica are some common mineral fillers used in thermoplastics compounds. For instance, calcium carbonate is added to polyethylene (PE) in the production of film to lower cost, improve toughness, and to modify the processing characteristics. It also enables the film to become "breathable."

The calcium carbonate usually used in polymer processing is ground limestone, which has a calcite crystal structure and is formed by a slow, natural precipitation process. In contrast, the calcium carbonate used in the invention as specified herein is a purified, refined or synthetic calcium carbonate. It is generally made from ground calcium carbonate as a starting material. It can be purified in a number of ways to remove trace metal content, for instance, raw calcium carbonate can be precipitated to remove trace metal, or the trace metal can be washed away during a wet grinding process.

During the wet grinding or precipitation processes, the calcium carbonate can also be coated with 1 - 3% by weight of a fatty acid, such as stearic acid, or other organic material containing carboxylic acid functional groups. These coatings improve the dispersibility as well as compatibility of the calcium carbonate in the polymer which in turn maximizes the performance and efficiency of the calcium carbonate.

In chemical composition, ground raw calcium carbonate and precipitated calcium carbonate are the same. However precipitated calcium carbonate's shape and size are different from that of ground raw calcium carbonate. For example, under high magnification, certain ground calcium carbonate is seen to be irregularly rhombohedral in shape. Precipitated calcium carbonate particles are more uniform and regular.

The distribution of particle sizes in ground calcium carbonate is much more broad than for a precipitated calcium carbonate of the same size, *i.e.,* there are many more larger particles, and many more small particles than in a precipitated calcium carbonate. The size of the largest of the particles (the "top size") is much greater for a ground calcium carbonate than for a precipitated calcium carbonate. The lower top size of a precipitated calcium carbonate gives better impact resistance in plastics than with a ground calcium carbonate.

Calcium carbonate is used in processing of polyhydroxyalkanoate polymers, such as to increase the processing window and to increase line speed in film production, and to decrease the cycle time in injection molding. However, the benefits imparted by calcium carbonate addition usually come at the cost of decreasing the thermal stability of the polymer itself. As discussed in greater detail below, this decrease in thermal stability can be large enough to reduce the performance of the polymer. In the case of film production, the decrease in thermal stability (and associated melt strength) can be so great that it can be difficult or impossible to make film in the first place if calcium carbonate is added.

The equilibrium melting point of poly-(3-hydroxybutyrate) is reported to be in the 188-197°C range, but the polymer begins to degrade (*e.g.*, via chain scission reactions) even before it is completely molten. The degradation mechanism is thought to be a random chain scission process (*i.e.*, beta-elimination) that results in reduced molecular weight (Y. Doi, "Microbial Polyesters", VCH Publishers, New York (1990); D. H. Melik and L. A. Schechtman, Polymer Engineering and Science 35:1795 (1995)).

The concentration of decrease in molecular weight, as a function of temperature and time, is generally referred to as "thermal stability". The thermal stability of PHA polymers is influenced by factors such as impurities and residual biomass in the polymer.

The thermal stability of the polyhydroxyalkanoate polymers is important for melt processing and for the ultimate performance of the fabricated products. For example, the impact/puncture toughness of PHA products are quite sensitive to molecular weight, with higher molecular weight being related to increased toughness. Also, in blown film processing, the bubble stability (*i.e.*, melt strength) is a very strong function of the molecular weight of the extrudate. Therefore, it is preferable to minimize molecular weight loss during the extrusion and fabrication of PHA products.

While the relatively poor thermal stability of PHA polymers and PHB copolymers and the consequent molecular weight loss during processing and part fabrication may be at least partly attributed to impurities and residual biomass in the polymer, many additives commonly used in petroleum-based thermoplastics will compromise the thermal stability of PHA polymers even further. As described herein, one of these is calcium carbonate. That is, while calcium carbonate is added to PHA polymer formulations to improve certain processing characteristics, such as increasing line speed and

decreasing cycle times, it does so at the expense of thermal stability and molecular weight of the polymer. In some applications where melt strength is critical, the negative effects can outweigh or eliminate any benefit of adding the calcium carbonate in the first place. One of ordinary skill must therefore balance the desire for increased production with the loss of thermal stability and molecular weight, and potential loss of quality in the finished product.

However, as described herein, it has been found that there exist certain types of calcium carbonate that do not impart these negative effects, or where such negative effects are minimal or reduced.

Disclosed herein are blends of PHA polymers as claimed with high purity grades of calcium carbonate that display considerably higher processing line speeds in cast film processing, which then enables one to produce films that are thinner and stronger than previously achievable. Surprisingly, the compositions do not suffer from a compromise in the thermal stability of the starting polymer. Likewise, these high purity grades of calcium carbonate behave similarly in PHA polymer formulations used in injection molding. Cycle times are decreased, and the flash exhibited on the finished articles is reduced.

As described therein, it has been found that using purified calcium carbonate as an additive in processing polyhydroxyalkanoates allows one to access the benefits generally seen in adding calcium carbonate to petroleum-based polymers (including, but not limited to, reduced cost, higher line speeds, decreased cycle times), but without the (or with lessened) negative effects (including, but not limited to) reduced melt strength, reduced thermal stability, reduction in molecular weight normally seen upon the addition of calcium carbonate to polyhydroxyalkanoates.

"Purified calcium carbonate" as defined herein, is a calcium carbonate that has been processed to remove trace metal impurities. The purified calcium carbonate has a total trace metal content (*e.g.*, determined by inductively coupled plasma (ICP) mass spectrometry) of less than 5000 ppm, a magnesium content of less than 2500 ppm, and an iron content of less than 500 ppm. Examples of precipitated calcium carbonates having one or more of these characteristics include, but are not limited to, for example, EMFORCE® Bio calcium carbonate and MULTIFLEX MM® calcium carbonate marketed and sold by Specialty Minerals grades marketed and sold by Specialty Minerals.

The high purity calcium carbonate has an average particle size of less than or equal to three microns. In certain embodiments, the particle size is for example, 0.05 microns to 3 microns, 0.1 microns to 2 microns, 0.5 microns to 1.5 microns. In particular embodiments, the average particle size is 0.07 microns, 0.1 microns, 0.5 microns, 1 micron, 1.5 microns, 2 microns, 2.5 microns or 3 microns. In other embodiments, where the particle is irregular, the size is provided as having specific aspect ratios.

Small particle size aids in dispersion and has other ancillary advantages. In other particular embodiments, the high purity calcium carbonate has a narrow size range distribution.

While not wishing to be bound by theory, it is believed that high purity calcium carbonate contains fewer elemental impurities, particularly trace metals, detrimental to processing of polyhydroxyalkanoate polymers, relative to other calcium carbonate that has been mined and processed, but not purified in any way (*e.g.*, low purity calcium carbonate).

Examples of ground, lower purity calcium carbonates include, (but are not limited to): OMYACARB® 3-FL calcium carbonate, OMYACARB® UF-FL calcium carbonate and OMYACARB® UFT-FL calcium carbonate (Omya Inc., Proctor, Vermont, USA). OMYACARB® 3-FL calcium carbonate is uncoated, with an average particle size of 3.2 microns. OMYACARB® UF-FL calcium carbonate is also uncoated, with an average particle size of 0.7 microns. OMYACARB® UFT-FL calcium carbonate is coated, with an average particle size of 0.7 microns. These calcium carbonates, such has the examples provided in Table 1, have higher amounts of trace metals.

Examples of high purity calcium carbonates include, but are not limited to: EMFORCE® Bio calcium carbonate, MULTIFLEX-MM® calcium carbonate, ULTRA-PFLEX® calcium carbonate and THIXO-CARB® calcium carbonate (Specialty Minerals Inc., Bethlehem, PA, USA). ULTRA-PFLEX® calcium carbonate is stated by the manufacturer to be surface treated, with an average particle size of 0.07 microns. MULTIFLEX-MM® calcium carbonate is uncoated, and has an average particle size 0.07 microns. EMforce Bio is coated, its particles have a high aspect ratio of 5.42, an average major axis of 1.08 microns, and an average minor axis of 0.25 microns. THIXO-CARB® 500 calcium carbonate is also surface coated, with an average particle size of 0.15 microns.

The use of high purity calcium carbonate in polyhydroxyalkanoate formulations is beneficial in such applications as the production of polyhydroxyalkanoate film, fiber, sheet, injection molding, blow molding, and thermoforming.

For instance, in injection molding, the purified calcium carbonate is used to reduce flash. Polyhydroxyalkanoate polymers can be challenging to injection mold because of their tendency to flash. The examples below show the effects of using low purity ground calcium carbonate, precipitated high purity calcium carbonate, wet milled high purity calcium carbonate, surface treated calcium carbonate, and differing concentrations of the above calcium carbonates in injection molding of polyhydroxyalkanoate. As is shown below, it was found that MULTIFLEX-MM® calcium carbonate, EMFORCE®Bio calcium carbonate, ULTRA-PFLEX® calcium carbonate. THIXO-CARB® calcium carbonate were all of sufficient purity to enhance the processing of properties of PHA's while having no negative impact on their thermal stability. Many physical properties and rheological properties of polymeric materials depend on the molecular weight and distribution of the polymer. Molecular weight is calculated in a number of different ways. Unless otherwise indicated,

"molecular weight" refers to weight average molecular weight.

"Weight average molecular weight" ($M_w$) is the sum of the products of the molecular weight of each fraction, multiplied by its weight fraction. $(\sum N_i M_i^2 / \sum N_i M_i)$. $M_w$ is generally greater than or equal to $M_n$. $M_z$ is the Z-average of the molecular weight distribution $(\sum N_i M_i^3 / \sum N_i M_i^2)$.

"Number average molecular weight" ($M_n$) represents the arithmetic mean of the distribution, and is the sum of the products of the molecular weights of each fraction, multiplied by its mole fraction ($\Sigma N_i M_i / \Sigma N_i$).

The "thermal stability" of a polymer sample is measured in two different ways. The thermal stability is represented herein by a sample's "k," which shows the change in Mw over time. It can also be measured by melt capillary stability (MCS), which shows the change in the capillary shear viscosity over time.

POLYHYDROXYALKANOATES (PHAS)

The polymers (*e.g.*, base and/or carrier polymers) for use in the formulations of the methods and compositions described herein are polyhydroxyalkanoate (hereinafter referred to as PHAs). Polyhydroxyalkanoates are biological polyesters synthesized by a broad range of natural and genetically engineered bacteria as well as genetically engineered plant crops (Braunegg et al., (1998), J. Biotechnology 65: 127-161; Madison and Huisman, 1999, Microbiology and Molecular Biology Reviews, 63: 21-53; Poirier, 2002, Progress in Lipid Research 41: 131-155). These polymers are biodegradable thermoplastic materials, produced from renewable resources, with the potential for use in a broad range of industrial applications (Williams & Peoples, CHEMTECH 26:38-44 (1996)). Useful microbial strains for producing PHAs, include *Alcaligenes eutrophus* (renamed as *Ralstonia eutropha*), *Alcaligenes latus, Azotobacter, Aeromonas, Comamonas, Pseudomonads,* and genetically engineered organisms including genetically engineered microbes such as *Pseudomonas, Ralstonia* and *Escherichia coli.*

In general, a PHA is formed by enzymatic polymerization of one or more monomer units inside a living cell. Over 100 different types of monomers have been incorporated into the PHA polymers (Steinbüchel and Valentin, FEMS Microbiol. Lett. 128; 219-228 (1995)). Examples of monomer units incorporated in PHAs include 2-hydroxybutyrate, lactic acid, glycolic acid, 3-hydroxybutyrate (hereinafter referred to as 3HB), 3-hydroxypropionate (hereinafter referred to as 3HP), 3-hydroxyvalerate (hereinafter referred to as 3HV), 3-hydroxyhexanoate (hereinafter referred to as 3HH), 3-hydroxyheptanoate (hereinafter referred to as 3HHep), 3-hydroxyoctanoate (hereinafter referred to as 3HO), 3-hydroxynonanoate (hereinafter referred to as 3HN), 3-hydroxydecanoate (hereinafter referred to as 3HD), 3-hydroxydodecanoate (hereinafter referred to as 3HDd), 4-hydroxybutyrate (hereinafter referred to as 4HB), 4-hydroxyvalerate (hereinafter referred to as 4HV), 5-hydroxyvalerate (hereinafter referred to as 5HV), and 6-hydroxyhexanoate (hereinafter referred to as 6HH). 3-hydroxyacid monomers incorporated into PHAs are the (D) or (R) 3-hydroxyacid isomer with the exception of 3HP which does not have a chiral center.

The PHA can be a homopolymer (where all monomer units are the same). Examples of PHA homopolymers include poly 3-hydroxyalkanoates (*e.g.*, poly 3-hydroxypropionate (hereinafter referred to as P3HP), poly 3-hydroxybutyrate (hereinafter referred to as PHB) and poly 3-hydroxyvalerate), poly 4-hydroxyalkanoates (*e.g.*, poly 4-hydroxybutyrate (hereinafter referred to as P4HB), or poly 4-hydroxyvalerate (hereinafter referred to as P4HV)) and poly 5-hydroxyalkanoates (*e.g.,* poly 5-hydroxyvalerate (hereinafter referred to as P5HV)).

In certain embodiments, the PHA can be a copolymer (containing two or more different monomer units) in which the different monomers are randomly distributed in the polymer chain. PHA copolymers include poly 3-hydroxybutyrate-co-3-hydroxypropionate (hereinafter referred to as PHB3HP), poly 3-hydroxybutyrate-co-4-hydroxybutyrate (hereinafter referred to as PHB4HB), poly 3-hydroxybutyrate-co-4-hydroxyvalerate (hereinafter referred to as PHB4HV), poly 3-hydroxybutyrate-co-3-hydroxyvalerate (hereinafter referred to as PHB3HV), poly 3-hydroxybutyrate-co-3-hydroxyhexanoate (hereinafter referred to as PHB3HH) and poly 3-hydroxybutyrate-co-5-hydroxyvalerate (hereinafter referred to as PHB5HV).

By selecting the monomer types and controlling the ratios of the monomer units in a given PHA copolymer a wide range of material properties can be achieved. Although examples of PHA copolymers having two different monomer units have been provided, the PHA can have more than two different monomer units (*e.g.*, three different monomer units, four different monomer units, five different monomer units, six different monomer units). An example of a PHA having 4 different monomer units would be PHB-co-3HH-co-3HO-co-3HD or PHB-co-3-HO-co-3HD-co-3HDd (these types of PHA copolymers are hereinafter referred to as PHB3HX). Typically where the PHB3HX has 3 or more monomer units the 3HB monomer is at least 70% by weight of the total monomers, preferably 85% by weight of the total monomers, most preferably greater than 90% by weight of the total monomers for example 92%, 93%, 94%, 95%, 96% by weight of the copolymer and the HX comprises one or more monomers selected from 3HH, 3HO, 3HD, 3HDd.

The homopolymer (where all monomer units are identical) PHB and 3-hydroxybutyrate copolymers (PHB3HP, PHB4HB, PHB3HV, PHB4HV, PHB5HV, PHB3HHP, hereinafter referred to as PHB copolymers) containing 3-hydroxy-

butyrate and at least one other monomer are of particular interest for commercial production and applications. It is useful to describe these copolymers by reference to their material properties as follows. Type 1 PHB copolymers typically have a glass transition temperature (Tg) in the range of 6°C to -10°C, and a melting temperature TM of between 80°C to 180°C. Type 2 PHB copolymers typically have a Tg of -20°C to-50°C and TM of 55°C to 90°C.

Preferred Type 1 PHB copolymers have two monomer units have a majority of their monomer units being 3-hydroxybutyrate monomer by weight in the copolymer, for example, greater than 78% 3-hydroxybutyrate monomer. Preferred PHB copolymers for this invention are biologically produced from renewable resources and include PHB4HB copolymers (such as Type 1 or Type 2 PHB copolymers). We disclose the following group of PHB copolymers:

PHB3HV is a Type 1 PHB copolymer where the 3HV content is in the range of 3% to 22% by weight of the polymer and preferably in the range of 4% to 15% by weight of the copolymer for example: 4% 3HV; 5% 3HV; 6% 3HV; 7% 3HV; 8% 3HV; 9% 3HV; 10% 3HV; 11% 3HV; 12% 3HV 13% 3HV; 14% 3HV; 15% 3HV.

PHB3HP is a Type 1 PHB copolymer where the 3-HP content is in the range of 3% to 15% by weight of the copolymer and preferably in the range of 4% to 15% by weight of the copolymer for example: 4% 3HP; 5% 3HP; 6% 3HP; 7% 3HP; 8% 3HP; 9% 3HP; 10% 3HP; 11% 3HP; 12% 3HP, 13% 3HP; 14% 3HP; 15% 3HP.

PHB4HB is a Type 1 PHB copolymer where the 4HB content is in the range of 3% to 15% by weight of the copolymer and preferably in the range of 4% to 15% by weight of the copolymer for example: 4% 4HB; 5% 4HB; 6% 4HB; 7% 4HB; 8% 4HB; 9% 4HB; 10% 4HB; 11% 4HB; 12% 4HB; 13% 4HB; 14% 4HB; 15% 4HB.

PHB4HV is a Type 1 PHB copolymer where the 4HV content is in the range of 3% to 15% by weight of the copolymer and preferably in the range of 4% to 15% by weight of the copolymer for example: 4% 4HV; 5% 4HV; 6% 4HV; 7% 4HV; 8% 4HV; 9% 4HV; 10% 4HV; 11% 4HV; 12% 4HV; 13% 4HV; 14% 4HV; 15% 4HV.

PHB5HV is a Type 1 PHB copolymer where the 5HV content is in the range of 3% to 15% by weight of the copolymer and preferably in the range of 4% to 15% by weight of the copolymer for example: 4% 5HV; 5% 5HV; 6% 5HV; 7% 5HV; 8% 5HV; 9% 5HV; 10% 5HV; 11% 5HV; 12% 5HV; 13% 5HV; 14% 5HV; 15% 5HV.

PHB3HH is a Type 1 PHB copolymer where the 3HH content is in the range of 3% to 15% by weight of the copolymer and preferably in the range of 4% to 15% by weight of the copolymer for example: 4% 3HH; 5% 3HH; 6% 3HH; 7% 3HH; 8% 3HH; 9% 3HH; 10% 3HH; 11% 3HH; 12% 3HH; 13% 3HH; 14% 3HH; 15% 3HH.

PHB3HX is a Type I PHB copolymer where the 3HX content is comprised of 2 or more monomers selected from 3HH, 3HO, 3HD and 3HDd and the 3HX content is in the range of 3% to 12% by weight of the copolymer and preferably in the range of 4% to 10% by weight of the copolymer for example: 4% 3HX; 5% 3HX; 6% 3HX; 7% 3HX; 8% 3HX; 9% 3HX; 10% 3HX by weight of the copolymer.

Type 2 PHB copolymers have a 3HB content of between 80% and 5% by weight of the copolymer, for example 80%, 75%, 70%, 65%, 60%, 55%, 50%, 45%, 40%, 35%, 30%, 25%, 20%, 15%, 10%, 5% by weight of the copolymer.

PHB4HB is a Type 2 PHB copolymer where the 4HB content is in the range of 20% to 60% by weight of the copolymer and preferably in the range of 25% to 50% by weight of the copolymer for example: 25% 4HB; 30% 4HB; 35% 4HB; 40% 4HB; 45% 4HB; 50% 4HB by weight of the copolymer.

PHB5HV is a Type 2 PHB copolymer where the 5HV content is in the range of 20% to 60% by weight of the copolymer and preferably in the range of 25% to 50% by weight of the copolymer for example: 25% 5HV; 30% 5HV; 35% 5HV; 40% 5HV; 45% 5HV; 50% 5HV by weight of the copolymer.

PHB3HH is a Type 2 PHB copolymer where the 3HH is in the range of 35% to 95% by weight of the copolymer and preferably in the range of 40% to 80% by weight of the copolymer for example: 40% 3HH; 45% 3HH; 50% 3HH; 55% 3HH; 60% 3HH; 65% 3HH; 70% 3HH; 80% 3HH by weight of the copolymer.

PHB3HX is a Type 2 PHB copolymer where the 3HX content is comprised of 2 or more monomers selected from 3HH, 3HO, 3HD and 3HDd and the 3HX content is in the range of 30% to 95% by weight of the copolymer and preferably in the range of 35% to 90% by weight of the copolymer for example: 35% 3HX; 40% 3HX; 45% 3HX; 50% 3HX; 55% 3HX; 60% 3HX; 65% 3HX; 70% 3HX; 75% 3HX; 80% 3HX; 85% 3HX; 90% 3HX by weight of the copolymer.

PHAs for use in the methods, compositions and pellets described in this invention are selected from: PHB or a Type 1 PHB copolymer as claimed; a PHA blend of PHB with a Type 1 PHB copolymer as claimed where the PHB content by weight of PHA in the PHA blend is in the range of 5% to 95% by weight of the PHA in the PHA blend; a PHA blend of PHB with a Type 2 PHB copolymer as claimed where the PHB content by weight of the PHA in the PHA blend is in the range of 5% to 95% by weight of the PHA in the PHA blend; a PHA blend of a Type 1 PHB copolymer with a different Type 1 PHB copolymer and where the content of the first Type 1 PHB copolymer is in the range of 5% to 95 % by weight of the PHA in the PHA blend; a PHA blend of a Type I PHB copolymer with a Type 2 PHA copolymer where the content of the Type 1 PHB copolymer is in the range of 30% to 95% by weight of the PHA in the PHA blend; a PHA blend of PHB with a Type 1 PHB copolymer and a Type 2 PHB copolymer where the PHB content is in the range of 10% to 90% by weight of the PHA in the PHA blend, where the Type I PHB copolymer content is in the range of 5% to 90% by weight of the PHA in the PHA blend and where the Type 2 PHB copolymer content is in the range of 5% to 90% by weight of the PHA in the PHA blend.

We disclose a PHA blend of PHB with a Type 1 PHB copolymer which can be a blend of PHB with PHB3HP

where the PHB content in the PHA blend is in the range of 5% to 90 % by weight of the PHA in the PHA blend and the 3HP content in the PHB3H P is in the range of 7% to 15% by weight of the PHB3HP.

We disclose a PHA blend of PHB with a Type 1 PHB copolymer which can be a blend of PHB with PHB3HV where the PHB content of the PHA blend is in the range of 5% to 90 % by weight of the PHA in the PHA blend and the 3HV content in the PHB3HV is in the range of 4% to 22% by weight of the PHB3HV.

The PHA blend of PHB with a Type 1 PHB copolymer can be a blend of PHB with PHB4HB where the PHB content of the PHA blend is in the range of 5% to 90 % by weight of the PHA in the PHA blend and the 4HB content in the PHB4HB is in the range of 4% to 15% by weight of the PHB4HB.

We disclose a PHA blend of PHB with a Type 1 PHB copolymer which can be a blend of PHB with PHB4HV where the PHB content of the PHA blend is in the range of 5% to 90 % by weight of the PHA in the PHA blend and the 4HV content in the PHB4HV is in the range of 4% to 15% by weight of the PHB4HV.

We disclose a PHA blend of PHB with a Type I PHB copolymer which can be a blend of PHB with PHB5HV where the PHB content of the PHA blend is in the range of 5% to 90 % by weight of the PHA in the PHA blend and the 5HV content in the PHB5HV is in the range of 4% to 15% by weight of the PHB5HV.

We disclose a PHA blend of PHB with a Type 1 PHB copolymer which can be a blend of PHB with PHB3HH where the PHB content of the PHA blend is in the range of 5% to 90 % by weight of the PHA in the PHA blend and the 3HH content in the PHB3HH is in the range of 4% to 15% by weight of the PHB3HH.

We disclose a PHA blend of PHB with a Type 1 PHB copolymer which can be a blend of PHB with PHB3HX where the PHB content of the PHA blend is in the range of 5% to 90 % by weight of the PHA in the PHA blend and the 3HX content in the PHB3HX is in the range of 4% to 15% by weight of the PHB3HX.

The PHA blend can be a blend of a Type 1 PHB copolymer selected from the group PHB4HB, with a second Type 1 PHB copolymer which is different from the first Type 1 PHB copolymer and is selected from the group PHB3HV, PHB3HP, PHB4HB, PHBV, PHV4HV, PHB5HV, PHB3HH and PHB3HX where the content of the First Type 1 PHB copolymer in the PHA blend is in the range of 10% to 90 % by weight of the total PHA in the blend; or the PHA blend can be a blend of a Type 1 PHB copolymer selected from the group PHB3HV, PHB3HP, PHB4HB, PHBV, PHV4HV, PHB5HV, PHB3HH and PHB3HX with a second Type 1 PHB copolymer which is different from the first Type 1 PHB copolymer and is selected from the group PHB4HB, where the content of the First Type 1 PHB copolymer in the PHA blend is in the range of 10% to 90 % by weight of the total PHA in the blend.

The PHA blend of PHB with a Type 2 PHB copolymer can be a blend of PHB with PHB4HB where the PHB content in the PHA blend is in the range of 30% to 95 % by weight of the PHA in the PHA blend and the 4HB content in the PHB4HB is in the range of 20% to 60% by weight of the PHB4HB.

We disclose a PHA blend of PHB with a Type 2 PHB copolymer which can be a blend of PHB with PHB5HV where the PHB content in the PHA blend is in the range of 30% to 95 % by weight of the PHA in the PHA blend and the 5HV content in the PHB5HV is in the range of 20% to 60% by weight of the PHB5HV.

We disclose a PHA blend of PHB with a Type 2 PHB copolymer which can be a blend of PHB with PHB3HH where the PHB content in the PHA blend is in the range of 35% to 95 % by weight of the PHA in the PHA blend and the 3HH content in the PHB3HH is in the range of 35% to 90% by weight of the PHB3HX.

We disclose a PHA blend of PHB with a Type 2 PHB copolymer which can be a blend of PHB with PHB3HX where the PHB content in the PHA blend is in the range of 30% to 95 % by weight of the PHA in the PHA blend and the 3HX content in the PHB3HX is in the range of 35% to 90% by weight of the PHB3HX.

The PHA blend can be a blend of PHB with a Type 1 PHB copolymer and a Type 2 PHB copolymer where the PHB content in the PHA blend is in the range of 10% to 90 % by weight of the PHA in the PHA blend, the Type 1 PHB copolymer content of the PHA blend is in the range of 5% to 90% by weight of the PHA in the PHA blend and the Type 2 PHB copolymer content in the PHA blend is in the range of 5% to 90% by weight of the PHA in the PHA blend.

For example we disclose a PHA blend having a PHB content in the PHA blend in the range of 10% to 90% by weight of the PHA in the PHA blend, a PHB3HV content in the PHA blend in the range 5% to 90% by weight of the PHA in the PHA blend, where the 3HV content in the PHB3HV is in the range of 3% to 22% by weight of the PHB3HV, and a PHBHX content in the PHA blend in the range of 5% to 90% by weight of the PHA in the PHA blend where the 3HX content in the PHBHX is in the range of 35% to 90% by weight of the PHBHX.

For example a PHA blend can have a PHB content in the PHA blend in the range of 10% to 90% by weight of the PHA in the PHA blend, a PHB3HV content in the PHA blend in the range 5% to 90% by weight of the PHA in the PHA blend, where the 3HV content in the PHB3HV is in the range of 3% to 22% by weight of the PHB3HV, and a PHB4HB content in the PHA blend in the range of 5% to 90% by weight of the PHA in the PHA blend where the 4HB content in the PHB4HB is in the range of 20% to 60% by weight of the PHB4HB.

We disclose a PHA blend having a PHB content in the PHA blend in the range of 10% to 90% by weight of the PHA in the PHA blend, a PHB3HV content in the PHA blend in the range 5% to 90% by weight of the PHA in the PHA blend, where the 3HV content in the PHB3HV is in the range of 3% to 22% by weight of the PHB3HV, and a PHB5HV content in the PHA blend in the range of 5% to 90% by weight ofthe PHA in the PHA blend where the 5HV content in

the PHB5HV is in the range of 20% to 60% by weight of the PHB5HV.

For example a PHA blend can have a PHB content in the PHA blend in the range of 10% to 90% by weight of the PHA in the PHA blend, a PHB4HB content in the PHA blend in the range 5% to 90% by weight of the PHA in the PHA blend, where the 4HB content in the PHB4HB is in the range of 4% to 15% by weight of the PHB4HB, and a PHB4HB content in the PHA blend in the range of 5% to 90% by weight of the PHA in the PHA blend where the 4HB content in the PHB4HB is in the range of 20% to 60% by weight of the PHB4HB.

For example a PHA blend can have a PHB content in the PHA blend in the range of 10% to 90% by weight of the PHA in the PHA blend, a PHB4HB content in the PHA blend in the range 5% to 90% by weight of the PHA in the PHA blend, where the 4HB content in the PHB4HB is in the range of 4% to 15% by weight of the PHB4HB, and a PHB5HV content in the PHA blend in the range of 5% to 90% by weight of the PHA in the PHA blend and where the 5HV content in the PHB5HV is in the range of 30% to 90% by weight of the PHB5HV.

For example a PHA blend can have a PHB content in the PHA blend in the range of 10% to 90% by weight of the PHA in the PHA blend, a PHB4HB content in the PHA blend in the range 5% to 90% by weight of the PHA in the PHA blend, where the 4HB content in the PHB4HB is in the range of 4% to 15% by weight of the PHB4HB, and a PHB3HX content in the PHA blend in the range of 5% to 90% by weight of the PHA in the PHA blend and where the 3HX content in the PHB3HX is in the range of 35% to 90% by weight of the PHB3HX.

We disclose a PHA blend having a PHB content in the PHA blend in the range of 10% to 90% by weight of the PHA in the PHA blend, a PHB4HV content in the PHA blend in the range 5% to 90% by weight of the PHA in the PHA blend, where the 4HV content in the PHB4HV is in the range of 3% to 15% by weight of the PHB4HV, and a PHB5HV content in the PHA blend in the range of 5% to 90% by weight of the PHA in the PHA blend where the 5HV content in the PHB5HV is in the range of 30% to 90% by weight of the PHB5HV.

For example a PHA blend can have a PHB content in the PHA blend in the range of 10% to 90% by weight of the PHA in the PHA blend, a PHB3HH content in the PHA blend in the range 5% to 90% by weight of the PHA in the PHA blend, where the 3HH content in the PHB3HH is in the range of 3% to 15% by weight of the PHB3HH, and a PHB4HB content in the PHA blend in the range of 5% to 90% by weight of the PHA in the PHA blend where the 4HB content in the PHB4HB is in the range of 20% to 60% by weight of the PHB4HB.

We disclose a PHA blend having a PHB content in the PHA blend in the range of 10% to 90% by weight of the PHA in the PHA blend, a PHB3HH content in the PHA blend in the range 5% to 90% by weight of the PHA in the PHA blend, where the 3HH content in the PHB3HH is in the range of 3% to 15% by weight of the PHB3HH, and a PHB5HV content in the PHA blend in the range of 5% to 90% by weight of the PHA in the PHA blend where the 5HV content in the PHB5HV is in the range of 20% to 60% by weight of the PHB5HV.

We disclose a PHA blend having a PHB content in the PHA blend in the range of 10% to 90% by weight of the PHA in the PHA blend, a PHB3 HH content in the PHA blend in the range 5% to 90% by weight of the PHA in the PHA blend, where the 3HH content in the PHB3HH is in the range of 3% to 15% by weight of the PHB3HH, and a PHB3HX content in the PHA blend in the range of 5% to 90% by weight of the PHA in the PHA blend where the 3HX content in the PHB3HX is in the range of 35% to 90% by weight of the PHB3HX.

We disclose a PHA blend having a PHB content in the PHA blend in the range of 10% to 90% by weight of the PHA in the PHA blend, a PHB3HX content in the PHA blend in the range 5% to 90% by weight of the PHA in the PHA blend, where the 3HX content in the PHB3HX is in the range of 3% to 12% by weight of the PHB3HX, and a PHB3HX content in the PHA blend in the range of 5% to 90% by weight of the PHA in the PHA blend where the 3HX content in the PHB3HX is in the range of 35% to 90% by weight of the PHB3HX.

For example a PHA blend can have a PHB content in the PHA blend in the range of 10% to 90% by weight of the PHA in the PHA blend, a PHB3HX content in the PHA blend in the range 5% to 90% by weight of the PHA in the PHA blend, where the 3HX content in the PHB3HX is in the range of 3% to 12% by weight of the PHB3HX, and a PHB4HB content in the PHA blend in the range of 5% to 90% by weight of the PHA in the PHA blend where the 4HB content in the PHB4HB is in the range of 20% to 60% by weight of the PHB4HB.

We disclose a PHA blend having a PHB content in the PHA blend in the range of 10% to 90% by weight of the PHA in the PHA blend, a PHB3HX content in the PHA blend in the range 5% to 90% by weight of the PHA in the PHA blend, where the 3HX content in the PHB3HX is in the range of 3% to 12% by weight of the PHB3HX, and a PHB5HV content in the PHA blend in the range of 5% to 90% by weight of the PHA in the PHA blend where the 5HV content in the PHB5HV is in the range of 20% to 60% by weight of the PHB5HV.

Microbial systems for producing the PHB copolymer PHBV are disclosed in US patent 4,477,654 to Holmes. PCT Patent Publication No. WO 02/08428, by Skraly and Sholl describes useful systems for producing the PHB copolymer PHB4HB. Useful processes for producing the PHB copolymer PHB3HH have been described (Lee et al., Biotechnology and Bioengineering, 67:240-244 (2000); Park et al., Biomacromolecules 2:248-254 (2001)). Processes for producing the PHB copolymers PHB3HX have been described by Matsusaki et al. (Biomacromolecules 1:17-22 (2000)).

In determining the molecular weight techniques such as gel permeation chromatography (GPC) can be used. In the methodology, a polystyrene standard is utilized. The PHA can have a polystyrene equivalent weight average

molecular weight (in daltons) of at least 500, at least 10,000, or at least 50,000 and/or less than 2,000,000, less than 1,000,000, less than 1,500,000, and less than 800,000. In certain embodiments, preferably, the PHAs generally have a weight-average molecular weight in the range of 100,000 to 700,000. For example, the molecular weight range for PHB and Type 1 PHB copolymers for use in this application are in the range of 400,000 daltons to 1.5 million daltons as determined by GPC method and the molecular weight range for Type 2 PHB copolymers for use in the application 100,000 to 1.5 million daltons.

Biodegradable Aromatic-Aliphatic Polyesters

The PHA can be combined with another polymer, or several other polymers. For instance, the PHA can be combined with one or more biodegradable aromatic-aliphatic polyesters. Such blends are discussed in, for example, U.S. Provisional Application No. 61/050,896 ("Biodegradable Polyester Blends"), filed May 6, 2008, and PCT Patent Publication No. WO 2009/137058.

Aromatic polyesters, which are not biodegradable, are synthesized by the polycondensation of aliphatic diols and aromatic dicarboxylic acids. The aromatic ring is resistant to hydrolysis, preventing biodegradability. Polyethylene terephthalate (PET) and polybutylene terephthalate (PBT) are formed by the polycondensation of aliphatic glycols and terephthalic acid. The biodegradability of aromatic polyesters can be modified by the addition of monomers that are not resistant to hydrolysis, aliphatic diol or diacid groups. The addition of such hydrolysis-sensitive monomers creates weak spots for hydrolysis to occur.

Aromatic-aliphatic polyesters are also made by polycondensation of aliphatic diols, but with a mixture of aromatic and aliphatic dicarboxylic acids. For instance, modification of PBT by addition of aliphatic dicarboxylic acids can produce polybutylene succinate terephthalate (PBST) (butane diol as the aliphatic diol and succinic and terephthalic acid). Another example is the family of polyesters sold under the trade name BIOMAX® (du Pont), the members of which are polymerized from PET and a variety of aliphatic acid monomers such as dimethylglutarate and diethylene glycol. In the synthesis of polybutylene adipate terephthalate (PBAT), butanediol is the diol, and the acids are adipic and terephthalic acids. Commercial examples include ECOFLEX® (BASF) and Eastar Bio (Eastman). ECOFLEX® has a melt temperature ($T_M$) of about 110°C to about 120°C, as measured by differential scanning calorimetry (DSC). Another example is polytetramethylene adipate terephthalate (PTMAT) is synthesized from tetramethylene glycol and adipic and terephthalic acids.

Biodegradable polymers therefore include polyesters containing aliphatic components. Among the polyesters are ester polycondensates containing aliphatic constituents and poly(hydroxycarboxylic) acid. The ester polycondensates can include diacids/diol aliphatic polyesters such as polybutylene succinate, polybutylene succinate co-adipate, aliphatic/aromatic polyesters such as terpolymers made of butylenes diol, adipic acid and terephtalic acid. The poly(hydroxycarboxylic) acids include lactic acid based homopolymers and copolymers, polyhydroxybutyrate (PHB), or other polyhydroxyalkanoate homopolymers and copolymers. Such polyhydroxyalkanoates include copolymers of PHB with higher chain length monomers, such as $C_6$-$C_{12}$, and higher.

Examples of biodegradable aromatic-aliphatic polyesters therefore include, but are not limited to, various copolyesters of PET and PBT with aliphatic diacids, diols, or hydroxy acids incorporated into the polymer backbone to render the copolyesters biodegradable or compostable; and various aliphatic polyesters and copolyesters derived from dibasic acids, *e.g.*, succinic acid, glutaric acid, adipic acid, sebacic acid, azealic acid, or their derivatives, *e.g.*, alkyl esters, acid chlorides, or their anhydrides; diols such as ethylene glycol, propylene glycol, 1,4-butanediol, 1,6-hexanediol, or 1,4-cyclohexanedimethanol.

An example of a suitable commercially available diacid/diol aliphatic polyester is the polybutylene succinate/adipate copolymers sold as BIONOLLE® 1000 and BIONOLLE® 3000 from the Showa High Polymer Company, Ltd. (Tokyo, Japan). An example of a suitable commercially available aromatic-aliphatic copolyester is the poly(tetramethylene adipate-co-terephthalate) sold as EASTAR BIO® Copolyester from Eastman Chemical or ECOFLEX® from BASF.

The biodegradable aromatic-aliphatic polyester can be a co-polyester. It can also itself be a blend of such polyesters or co-polyesters.

Blends of PHAs and Biodegradable Aromatic-Aliphatic Polyesters

PHAs and biodegradable aromatic-aliphatic polyesters can be combined to make blends of the polymers. Such blends are discussed in, for example, U.S. Provisional Application No. 61/050,896 ("Biodegradable Polyester Blends"), filed May 6, 2008 and PCT Patent Publication No. WO 2009/137058.

The amount of PHA in the overall blend can be about 1% by weight, about 5%, about 10%, about 15%, about 20%, about 25%, about 30%, about 35%, about 40%, about 45%, about 50%, about 55%, about 60%, about 65%, about 70%, about 75%, about 80%, about 85%, about 90%, about 95%, or about 99% by weight. The selection and amount of each polymer will effect the softness, stiffness, texture, toughness, and other properties of the final product as will be understood by those of ordinary skill in the art. Typically, the PHA component is present in the blend in an amount of

from about 10% to 95%, preferably from about 15% to about 85%, more preferably from about 20% to about 80%, by total weight of the total polymer components.

Each polymer component can contain a single polymer species or a blend of two or more species. For instance, and PHA component can in turn be a blend of PHA species as described above. Likewise, the biodegradable aromatic-aliphatic polyester component can be a mixture or blend of biodegradable aromatic-aliphatic polyesters.

Methods for making and using thermoplastic compositions are well known to those of skill in the art, and skilled practitioners will appreciate that the biodegradable blends of the present invention can be used in a wide range of applications and further, as is known to skilled practitioners, can contain one or more additive, *e.g.*, a plasticizer, nucleating agent, filler, antioxidant, ultraviolet stabilizer, lubricant, slip/antiblock, pigment, flame retardant, and/or antistatic agent.

PHA and Non-PHA blends

The PHA polymers can be blended with other polymers, and can be blended in the presence of additives, branching agents and cross-linking agents to form compositions with improved properties. The percentages of PHA to other polymers can be 5% to 95% by weight.

Non-PHA polymers can include poly butylene succinate (PBS), poly butylene succinate adipate (PBSA), Polyvinyl acetate (PVAc) and related polymers, polybutylene adipate terephthalate (PBAT).

Poly butylene succinate (PBS) and poly butylene succinate adipate (PBSA) are synthetic, petroleum-based aliphatic polyesters, made by condensation polymerization followed by chain extension using multi-functional isocyanates. PBS is a combination of 1,4-butanediol and succinic acid, while PBSA is a combination of 1,4-butanediol, succinic acid, and adipic acid. Although usually synthesized from petroleum, it is also possible for the monomers that make up PBS and PBSA to be produced from biobased feedstock.

The two polymers are reportedly biodegradable at ambient temperatures (*i.e.*, are "cold compostable") in soil and marine conditions. PBS degrades more slowly compared to PBSA. Further, PBS and PBSA are known to biodegrade more slowly than PHAs, which are also cold-compostable.

Of the two, PBS has higher crystallinity, and is better suited for molding, while PBSA has lower crystallinity, is better suited to film applications. Both polymers have a low (sub-zero) glass transition temperature (Tg), and their processing temperatures overlap with PHAs. As disclosed herein, PHA polymers can be combined with PBS and/or PBSA using conventional melt-blending techniques. In this invention, the above-mentioned blends are melt-blended in the presence of a reactive entity such as organic peroxide branching agents; branching co-agents may also be used. The reactive blending approach produces compositions that have considerably better melt and solid-state properties compared to the non-reactive blends. In particular, the reactive (inventive) blends have higher melt strength, broader processing window, and better mechanical properties. As shown herein, the crystallization of PHA is influenced significantly by the presence of even small amounts of PBS and/or PBSA. Reactive blends were found to process very well, with improved antiblocking behavior, higher line speeds and better roll-release behavior. Addition of PBS and/or PBSA to PHAs improved the tear, puncture, and tensile strength performance of PHA films. In general, PBSA performed better when blended with PHA than did PBS. Reactive blending resulted in considerably better performance characteristics of the finished film relative to equivalent dry blends. Addition of as little as 25% PBSA doubled the tear and puncture resistance of PHA films. The addition of PBS and PBSA also reduced flash in injection molding applications.

Polyvinyl acetate (PVAc) and related polymers can also be blended with PHAs. The vinyl acetate tougheners include a vinyl acetate homopolymer or copolymer and at least one of the following monomers: ethylene (*e.g.*, up to 14 percent by weight), (meth)acrylic esters (esters of unbranched or branched alcohols having from 1 to 15 carbon atoms, *e.g.*, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, norbornyl acrylate), vinyl esters having from 1 to 12 carbon atoms in the carboxylic acid radical (*e.g.*, vinyl propionate, vinyl laurate, vinyl esters of alpha-branched carboxylic acids having from 9 to 13 carbon atoms), carboxyl-group-containing monomers (*e.g.*, acrylic acid, methacrylic acid, crotonic acid, itaconic acid, fumaric acid, maleic acid, and salts thereof), glycidyl methacrylate, hydroxyethyl methacrylate, acrylamide and vinyl pyrollidone.

Polylactic acid or polylactide (PLA) and polycaprolactone (PCL) are both biodegradable, thermoplastic, aliphatic polyesters.

PLA is generally made from plant sugar, which is used to make lactic acid via bacterial fermentation. The lactic acid is then oligomerized, commonly by ring-opening polymerization using a catalyst.

PCL is made from petroleum, but is fully biodegradable. Like PLA, it is oligomerized (from caprolactone units), commonly by ring-opening polymerization using a catalyst.

PHA can also be blended with one or more biodegradable aromatic-aliphatic polyesters. Such blends are discussed in, for example, PCT Patent Publication No. WO 2009/137058, which was published in English and designates the United States.

Aromatic polyesters, which are not biodegradable, are synthesized by the polycondensation of aliphatic diols

and aromatic dicarboxylic acids. The aromatic ring is resistant to hydrolysis, preventing biodegradability. Polyethylene terephthalate (PET) and polybutylene terephthalate (PBT) are formed by the polycondensation of aliphatic glycols and terephthalic acid. The biodegradability of aromatic polyesters can be modified by the addition of monomers that are not resistant to hydrolysis, aliphatic diol or diacid groups. The addition of such hydrolysis-sensitive monomers creates weak spots for hydrolysis to occur.

Aromatic-aliphatic polyesters are also made by polycondensation of aliphatic diols, but with a mixture of aromatic and aliphatic dicarboxylic acids. For instance, modification of PBT by addition of aliphatic dicarboxylic acids can produce polybutylene succinate terephthalate (PBST) (butanediol as the aliphatic diol and succinic and terephthalic acid). Another example is the family of polyesters sold under the trade name BIOMAX® (DuPont), the members of which are polymerized from PET and a variety of aliphatic acid monomers such as dimethylglutarate and diethylene glycol. In the synthesis of polybutylene adipate terephthalate (PBAT), butanediol is the diol, and the acids are adipic and terephthalic acids. Commercial examples include ECOFLEX® (BASF) and Eastar Bio (Eastman). ECOFLEX® has a melt temperature ($T_M$) of about 110°C to about 120°C, as measured by differential scanning calorimetry (DSC). Another example is polytetramethylene adipate terephthalate (PTMAT) which is synthesized from tetramethylene glycol and adipic and terephthalic acids.

Biodegradable polymers therefore include polyesters containing aliphatic components. Among the polyesters are ester polycondensates containing aliphatic constituents and poly(hydroxycarboxylic) acid. The ester polycondensates can include diacids/diol aliphatic polyesters such as polybutylene succinate, polybutylene succinate co-adipate, aliphatic/aromatic polyesters such as terpolymers made of butylenes diol, adipic acid and terephtalic acid. The poly(hydroxycarboxylic) acids include lactic acid based homopolymers and copolymers, polyhydroxybutyrate (PHB), or other polyhydroxyalkanoate homopolymers and copolymers. Such polyhydroxyalkanoates include copolymers of PHB with higher chain length monomers, such as $C_6$-$C_{12}$, and higher.

Examples of biodegradable aromatic-aliphatic polyesters therefore include, but are not limited to, various copolyesters of PET and PBT with aliphatic diacids, diols, or hydroxy acids incorporated into the polymer backbone to render the copolyesters biodegradable or compostable; and various aliphatic polyesters and copolyesters derived from dibasic acids, *e.g.*, succinic acid, glutaric acid, adipic acid, sebacic acid, azealic acid, or their derivatives, *e.g.*, alkyl esters, acid chlorides, or their anhydrides; diols such as ethylene glycol, propylene glycol, 1,4-butanediol, 1,6-hexanediol, or 1,4-cyclohexanedimethanol.

An example of a suitable commercially available diacid/diol aliphatic polyester is the polybutylene succinate/adipate copolymers sold as BIONOLLE® 1000 and BIONOLLE® 3000 from the Showa High Polymer Company, Ltd. (Tokyo, Japan). An example of a suitable commercially available aromatic-aliphatic copolyester is the poly(tetramethylene adipate-co-terephthalate) sold as EASTAR BIO® Copolyester from Eastman Chemical or ECOFLEX® from BASF. The biodegradable aromatic-aliphatic polyester can be a copolyester. It can also itself be a blend of such polyesters or copolyesters.

Branched Polyhydroxyalkanoates

Branched compositions of PHA used in the methods and compositions described herein improve the melt strength of PHAs, a desirable property for many polymer product applications. Melt strength is a rheological property that can be measured a number of ways. One measure is G'. G' is the polymer storage modulus measured at melt processing temperatures.

Polyhydroxyalkanoate polymers are branched using a cross-linking agent, also referred to as co-agents containing two or more reactive functional groups such as epoxides or double bonds. Another type of crosslinking agent is peroxides which function by generating reactive free radicals at a specific temperature. These cross-linking agents modify the properties of the polymer such as but not limited to melt strength or toughness.

One type of cross-linking agent is an "epoxy functional compound." As used herein, "epoxy functional compound" is meant to include compounds with two or more epoxide groups capable of increasing the melt strength of polyhydroxyalkanoate polymers by branching, *e.g.*, end branching as described above. When an epoxy functional compound is used as the cross-linking agent in the disclosed methods, a branching agent is optional. As such one embodiment of branching includes reacting a starting polyhydroxyalkanoate polymer (PHA) with an epoxy functional compound. Alternatively, another method of branching includes reacting a starting polyhydroxyalkanoate polymer, a branching agent and an epoxy functional compound. Alternatively, another branching method includes reacting a starting PHA, and an epoxy functional compound in the absence of a branching agent.

Such epoxy functional compounds can include epoxy-functional, styrene-acrylic polymers (such as, but not limited to, *e.g.*, JONCRYL® ADR-4368 (BASF), or MP-40 (Kaneka)), acrylic and/or polyolefin copolymers and oligomers containing glycidyl groups incorporated as side chains (such as, but not limited to, *e.g.*, LOTADER® (Arkema), poly(ethylene-glycidyl methacrylate-co-methacrylate)), and epoxidized oils (such as, but not limited to, *e.g.*, epoxidized soybean, olive, linseed, palm, peanut, coconut, seaweed, cod liver oils, or mixtures thereof, *e.g.*, MERGINAT® ESBO (Hobum,

Hamburg, Germany)and EDENOL® B 316 (Cognis, Dusseldorf, Germany)).

For example, reactive acrylics or functional acrylics cross-linking agents are used to increase the molecular weight of the polymer in the branched polymer compositions described herein. Such cross-linking agents are sold commercially. BASF, for instance, sells multiple compounds under the trade name "JONCRYL®", which are described in U.S. Patent No. 6,984,694 to Blasius et al., "Oligomeric chain extenders for processing, post-processing and recycling of condensation polymers, synthesis, compositions and applications". One such compound is JONCRYL® ADR-4368CS, which is styrene glycidyl methacrylate and is discussed below. Another is MP-40 (Kaneka). And still another is "Petra" line from Honeywell, see for example, U.S. Patent No. 5,723,730. Such polymers are often used in plastic recycling (*e.g.*, in recycling of polyethylene terephthalate) to increase the molecular weight (or to mimic the increase of molecular weight) of the polymer being recycled. Such polymers often have the general structure:

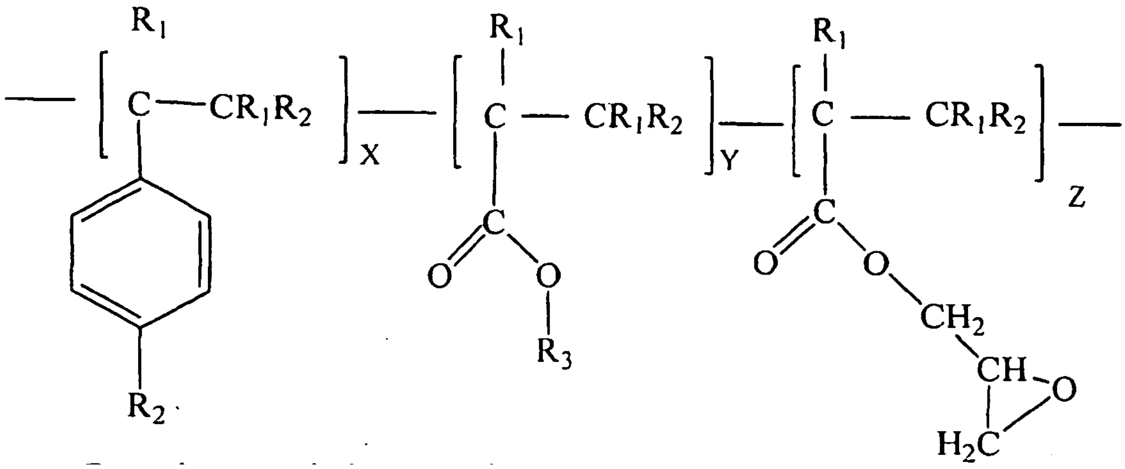

$R_1$ and $R_2$ are independently H or alkyl
$R_3$ is alkyl
X and Y are 1-20
Z is 2-20
alkyl is $C_1$-$C_8$

Without wishing to be bound by theory, it is believed that the epoxy-functional polymeric acrylics are capable of branching polyesters, and effectively repair the damage (in particular, loss of melt strength G') that occurs to the molecular weight of the polyester in the extruder. The epoxy-functional compounds may also improve thermal stability of polyhydroxyalkanoate polymers by preventing beta scission.

E.I. du Pont de Nemours & Company sells multiple reactive compounds under the trade name ELVALOY®, which are ethylene copolymers, such as acrylate copolymers, elastomeric terpolymers, and other copolymers. One such compound is ELVALOY® PTW, which is a copolymer of ethylene-n-butyl acrylate and glycidyl methacrylate. Omnova sells similar compounds under the trade names "SX64053," "SX64055," and "SX64056." Other entities also supply such compounds commercially.

Specific polyfunctional polymeric compounds with reactive epoxy groups are the styrene-acrylic copolymers and oligomers containing glycidyl groups incorporated as side chains. Several useful examples are described in U.S. Patent No. 6,984,694 to Blasius et al., "Oligomeric chain extenders for processing, post-processing and recycling of condensation polymers, synthesis, compositions and applications". These materials are based on oligomers with styrene and acrylate building blocks that have glycidyl groups incorporated as side chains. A high number of epoxy groups per oligomer chain can be used, for example at least 10, greater than 15, or 3000, specifically greater than 4000, and more specifically greater than 6000. These are commercially available from Johnson Polymer, LLC (now owned by BASF) under the trade name JONCRYL®, ADR 4368 material. Other types of polyfunctional polymer materials with multiple epoxy groups are acrylic and/or polyolefin copolymers and oligomers containing glycidyl groups incorporated as side chains. A further example of a such polyfunctional carboxy-reactive material is a co- or ter-polymer including units of ethylene and glycidyl methacrylate (GMA), available under the trade name LOTADER® resin, sold by Arkema. These materials can further comprise methacrylate unites that are not glycidyl. An example of this type is poly(ethylene-glycidyl methacrylate-co-methacrylate).

Fatty acid esters or naturally occurring oils containing epoxy groups (epoxidized) can also be used. Examples of naturally occurring oils are olive oil, linseed oil, soybean oil, palm oil, peanut oil, coconut oil, seaweed oil, cod liver oil, or a mixture of these compounds. Particular preference is given to epoxidized soybean oil (*e.g.*, MERGINAT® ESBO from Hobum, Hamburg, or EDENOL® B 316 from Cognis, Dusseldorf), but others may also be used.

As used herein, "epoxy functional compound" is meant to include compounds with epoxide groups capable of increasing the melt strength of polyhydroxyalkanoate polymers by end chain branching as described above. Such epoxy functional compounds can include epoxy-functional, styrene-acrylic polymers (such as, but not limited to, *e.g.*, JONCRYL® ADR-4368 (BASF), or MP-40 (Kaneka)), acrylic and/or polyolefin copolymers and oligomers containing glycidyl groups incorporated as side chains (such as, but not limited to, *e.g.*, LOTADER® (Arkema), poly(ethylene-glycidyl methacrylate-co-methacrylate)), and epoxidized oils (such as, but not limited to, *e.g.*, epoxidized soybean, olive, linseed, palm, peanut, coconut, seaweed, cod liver oils, or mixtures thereof, *e.g.*, MERGINAT® ESBO (Hobum, Hamburg, Germany) and EDENOL® B 316 (Cognis, Dusseldorf, Germany)).

In general, it appears that compounds with terminal epoxides may perform better than those with epoxide groups located elsewhere on the molecule.

Branched PHA compositions can also be prepared by using peroxides, for example, at most 2 wt%, or as little as 0.05 wt%. After reaction of the peroxide with the PHA is complete, the generated free-radicals are essentially all decomposed resulting in a branched PHA containing little or no residual peroxide initiator. Additionally the PHA can be, for example, thermolysed at a temperature of at least about 180°C or at most about 220°C before the free-radical branching reaction step.

Examples of a suitable peroxide includes dicumyl peroxide, t-amyl-2-ethylhexyl peroxycarbonate, 1,1-bis(t-butylperoxy)-3,3,5-trimethylcyclohexane, 2,5-dimethyl-2,5-di(t-butylperoxy) hexane, 2,5-bis(t-butylperoxy)-2,5-dimethylhexane, 2,5-dimethyl-di(t-butylperoxy)hexyne-3, di-t-butyl peroxide, benzoyl peroxide, di-t-amyl peroxide, t-butyl cumyl peroxide, n-butyl-4,4-bis(t-butylperoxy)valerate, 1,1-di(t-butylperoxy)-3,3,5-trimethyl-cyclohexane, 1,1-di(t-butylperoxy)cyclohexane, 1,1-di(t-amylperoxy)-cyclohexane, 2,2-di(t-butylperoxy)butane, ethyl-3,3-di(t-butylperoxy)butyrate, 2,2-di(t-amylperoxy)propane, ethyl-3,3-di(t-amylperoxy)butyrate, t-butylperoxy-acetate, t-amylperoxyacetate, t-butylperoxybenzoate, t-amylperoxybenzoate, and di-t-butyldiperoxyphthalate.

The reaction temperature can be, for example, at least about 140°C, at least about 190°C, at most about 200°C, or at most about 210°C.

The reaction time can be, for example, at least about 5 s, at least about 30 s, at most about 120 s, or at most about 240 s.

The free radical initiator can have a half-life of, for example, at most about one-fifth or at most about one-half of the reaction time at the reaction temperature.

## Production and Processing of Biodegradable Blend Compositions

Biodegradable blend compositions can be produced using any art-known method that includes adding a biodegradable aromatic-aliphatic polyesters to a thermoplastic. The biodegradable aromatic-aliphatic polyesters can be added to a thermoplastic as a dry biodegradable aromatic-aliphatic polyesters composition and/or as a biodegradable aromatic-aliphatic polyesters formulation.

Optimal amounts to be added will depend on various factors known to skilled practitioners, *e.g.*, cost, desired physical characteristics of the thermoplastic (*e.g.*, mechanical strength), and the type of processing to being performed (raising, *e.g.*, considerations of line speeds, cycle times, and other processing parameters). Also to be considered is whether the thermoplastic composition includes other additives, *e.g.*, plasticizers, stabilizers, pigments, fillers, reinforcing agents, and/or mold release agents. In general, however, a biodegradable aromatic-aliphatic polyesters can be included in a thermoplastic composition such that the composition contains about 5% to about 95%, *e.g.*, about 5% to about 90%, about 20% to about 80% biodegradable aromatic-aliphatic polyesters, based on the total weight of the composition. In certain embodiments of the present invention, the composition contains about 1% to about 10%, *e.g.*, about 1% to about 5% biodegradable aromatic-aliphatic polyesters.

The biodegradable polymeric compositions described in the present invention can be produced using any art-known method for processing polymeric compositions, including injection molding, compression molding, thermoforming, extrusion, casting, blowing, etc.

Also to be considered is whether the polymeric composition includes other additives, *e.g.*, plasticizers, stabilizers, pigments, fillers, reinforcing agents, and/or mold release agents. With any polymeric resin-based compound, additives can provide easier processing and a more desirable final appearance and properties for the compound. Optimal amounts to be added will depend on various factors known to skilled practitioners, *e.g.*, cost, desired physical characteristics of the polymeric composition (*e.g.*, mechanical strength), and the type of processing to being performed (raising, *e.g.*, considerations of line speeds, cycle times, and other processing parameters). Those skilled in the art of thermoplastics compounding, without undue experimentation but with reference to treatises such as Plastics Additives Database (2004) from Plastics Design Library (williamandrew.com), can select from many different types of additives for inclusion into the polymeric compositions described herein.

The additive can be any compound known to those of skill in the art to be useful in the production of polymeric articles. Exemplary additives include, *e.g.*, plasticizers (*e.g.,* to increase flexibility of the polymeric composition), antioxidants (*e.g.*, to protect the polymeric composition from degradation by ozone or oxygen), ultraviolet stabilizers (*e.g.*, to protect against weathering), lubricants (*e.g.*, to reduce friction), pigments (*e.g.*, to add color to the polymeric composition), flame retardants, fillers, antistatic agents, reinforcing agents, and/or mold release agents. Optimal amounts to be added will depend on various factors known to skilled practitioners, *e.g.*, cost, desired physical characteristics of the polymeric composition (*e.g.*, mechanical strength), and the type of processing to being performed (raising, *e.g.*, considerations of line speeds, cycle times, and other processing parameters). It is well within the skilled practitioner's abilities to determine whether an additive should be included in a polymeric composition and, if so, what additive and the amount that should be added to the composition.

Nucleating agents can be used to control the concentration at which the polymer crystallizes. Plasticizers are used to aid processing, change the glass transition temperature and modulus of the composition. Surfactants are generally used to de-dust, lubricate, reduce surface tension, and/or densify. Lubricants are normally used to reduce sticking to hot processing metal surfaces. Binders can beneficially unite the other components within the polymer. Fillers ordinarily are used to reduce cost and gloss. Antioxidants can be used to prevent aging and embrittlement of the polymer. Impact modifiers are useful in rigid polymers to increase toughness. Pigments and colorants can be organic, or can be minerals such as titanium dioxide, and can be opacifying pigments, or tinting pigments.

For instance, the polymeric composition can also include an optional nucleating agent to aid in crystallization of the polymeric composition.

The nucleating agent can be, but is not limited to, cyanuric acid or related compounds, metal compounds including composite oxides, for example, or carbon black, mica talc, silica, boron nitride, clay, calcium carbonate, synthesized silicic acid and salts, metal salts of organophosphates, kaolin, and possibly other materials. Nucleating agents for various polymers are known, and can include simple substances, metal compounds including composite oxides, for example, carbon black, calcium carbonate, synthesized silicic acid and salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, metal salts of organophosphates, and boron nitride; low-molecular organic compounds having a metal carboxylate group, for example, metal salts of such as octylic acid, toluic acid, heptanoic acid, pelargonic acid, lauric acid, myristic acid, palmitic acid, stearic acid, behenic acid, cerotic acid, montanic acid, melissic acid, benzoic acid, p-tert-butylbenzoic acid, terephthalic acid, terephthalic acid monomethyl ester, isophthalic acid, and isophthalic acid monomethyl ester; high molecular weight organic compounds having a metal carboxylate group, for example, metal salts of such as: carboxyl-group-containing polyethylene obtained by oxidation of polyethylene; carboxyl-group-containing polypropylene obtained by oxidation of polypropylene; copolymers of olefins, such as ethylene, propylene and butene-1, with acrylic or methacrylic acid; copolymers of styrene with acrylic or methacrylic acid; copolymers of olefins with maleic anhydride; and copolymers of styrene with maleic anhydride; high-molecular organic compounds, for example: alpha-olefins branched at their 3-position carbon atom and having no fewer than 5 carbon atoms, such as 3,3 dimethylbutene-1,3-methylbutene-1,3-methylpentene-1,3-methylhexene-1, and 3,5,5-trimethylhexene-1; polymers of vinylcycloalkanes such as vinylcyclopentane, vinylcyclohexane, and vinylnorbornane; polyalkylene glycols such as polyethylene glycol and polypropylene glycol; poly(glycolic acid); cellulose; cellulose esters; and cellulose ethers; phosphoric or phosphorous acid and its metal salts, such as diphenyl phosphate, diphenyl phosphite, metal salts of bis(4-tert-butylphenyl) phosphate, and methylene bis-(2,4-tert-butylphenyl)phosphate; sorbitol derivatives such as bis(p-methylbenzylidene) sorbitol and bis(p-ethylbenzylidene) sorbitol; and thioglycolic anhydride, p-toluenesulfonic acid and its metal salts. The above nucleating agents may be used either alone or in combinations with each other.

The nucleating agent can also be another polymer. For instance, the nucleating agent can be polyhydroxybutyrate.

The nucleating agent can be a nucleating agent as described in U.S. Patent Nos. 5,693,389, 5,973,100, 6,620,869, 7,208,535, 6,025,028, U.S. Published Application No. US 2005/0209377 A1 (by Padwa, published September 22, 2005), and in PCT Patent Publication No. WO 2009/129499, by Whitehouse et al., which was filed and published in English, and designates the United States.

The nucleating agent can be another PHA, as is described in U.S. Patent No. 5,693,389 to Liggat. For instance, the nucleating agent can be PHB, or PHBV. Such PHA nucleating agents should have a crystalline melting point at least 5°C above the crystalline melting point of the base polymer, more preferably 10°C to about 50°C above the crystalline melting point of the base polymer. The PHA nucleating agent can be combined with the base polymer at a concentration of 0.1% to 20% w/w. The nucleating agent PHA can be in the form of particles of 5 to 500 microns, or it can be molten. It can also be annealed. It can also be compounded in a similar manner to that of base resins.

When combined with the base polymer, the mixture should be mixed at a temperature below the crystalline melting point of the PHA nucleating agent. Alternatively, the mixture can be completely melted, and then the temperature dropped to a point below the crystalline melting point of the PHA nucleating agent, so that the nucleating agent crystallizes.

The nucleating agent can be a composition containing organophosphorus compound having at least two phosphonic acid moieties, as disclosed in U.S. Patent Nos. 5,973,100, 6,620,869, 7,208,535 (to Asrar and Pierre), and U.S. Patent No. 6,025,028 (to Asrar, Pierre and D'Haene). For instance, the composition can contain an organophosphorus

compound having at least two phosphonic acid moieties, and either an organic metal salt, an inorganic metal oxide, a metal hydroxide, or a metal carbonate. The composition can also contain a solvent for the nucleating agent. The solvent can be removed to produce a particulate nucleating agent.

Organophosphorus compounds described as nucleants include 1-hydroxy-lower alkylidene-1,1-diphosphonic acids such as 1-hydroxyethylidene-1,1-diphosphonic acid (HEDP), 1-hydroxypropylidene-1,1-diphosphonic acid, 1-hydroxybutylidene-1,1-phosphonic acid, or 1-hydroxycyclohexylidene-1,1-diphosphonic acid. Both acid moieties can be phosphonic acid moieties, and include a methyl group and a hydroxy group (*i.e*., HEDP). The organophosphorus compounds can also be metallic salts, preferably mono-metallic salts. It is also taught that not all, *e.g*., less than 70%, and more preferably less than 60% of the phosphonic acid moieties are involved in the salt formation since it has been found that excessive salt formation may under some conditions adversely influence the effectiveness of the nucleants.

The organophosphorus compounds can be dissolved in a nucleating agent solvent (*i.e.,* a solvent which dissolves the organophosphorus compound and which does not intolerably reduce its effectiveness as a nucleant and preferably enhances its nucleation activity). Such solvents include but are not limited to $C_1$ to $C_6$ aliphatic mono, di- and tri- ols such as methanol, ethanol, ethylene glycol, 1- or 2-propanol, propylene glycol, glycerol, 2-methyl-2-propanol, 2-butanol and the like, and further including mixtures of such solvents with each other and with water. The nucleating agent solvent needs to be appropriately selected since it has been found that some solvents such as acetone and tetrahydrofuran when used with some organophosphorus compounds such as HEDP are not effective nucleating agent solvents. However, it is known that mixtures of solvents, *e.g*., methanol and acetone, can serve as effective nucleating agent solvents even though one of the solvents in the mixture is not an effective nucleating agent solvent when used alone.

The nucleating agents as described can include a mixture of an organophosphorus compound having at least two phosphonic acid moieties, a nucleating agent solvent, and optionally an organic metal salt, an inorganic metal oxide, metal hydroxide or metal carbonate, and/or a weak organic base. Organic metal salts and/or certain inorganic compounds can be used to improve the nucleation activity and/or reduce the extent of discoloration and/or improve the clarity of PHA-derived products when used in combination with the organophosphorus compounds. The organic metal salt can be an organic acid metal salt, or a fatty acid metal salt. The inorganic compound can be a metal oxide, a metal hydroxide or a metal carbonate, such as those selected from Groups I to V of the periodic table, such as aluminum, antimony, tin, sodium, calcium, magnesium, barium or zinc. Preferably the metal is one which has benign environmental and toxicological properties such as magnesium, calcium and barium. Preferred fatty acids include stearic acid, palmitic acid, acetic acid, propionic acid, caproic acid, oleic acid, behenic acid and montanic acid. Specifically taught are the fatty acid metal salts of calcium stearate or magnesium stearate.

The weak organic base is one which is effective in improving the elongational properties and/or clarity of the polymeric material. It should be polymer-miscible or -soluble and melt at a sufficiently high temperature so that the solvent can be readily removed. It can include a mono-, bis-, or tri-fatty acid amide, as these generally exhibit good hydrolytic stability in the presence of organophosphorus compounds. The weak organic base can be a stearamide, *e.g*., ethylene bistearamide (EBS). It can be present in the polymeric compositions in an amount between about 0.01 to 9.0 phr, about 0.05 to 1.0 phr, or about 0.1 to 0.5 phr. Such organophosphorus nucleating agents can include HEDP/calcium stearate/EBS, preferably in weight ratios of about 0.8/1.5/1.7 or some other suitable ratio.

Such nucleating agents are used in an amount typically ranging from 0.001 to 5 phr (parts per hundred of resin), about 0.005 to 2 phr, or about 0.01 to 0.5 phr. Exemplary nucleating agents include an organic metal salt (or inorganic metal oxide, metal hydroxide or metal carbonate) and an organophosphorus compound in weight ratios of about 0.01:1 1 to 10:1, about 0.05:1 to 7.5:1, or about 0.1:1 to 5:1. When calcium stearate is used, a 3:1 ratio is taught to provide a suitable solid support for the organophosphorus-solvent solution and to produce a PHA nucleant with desirable activity.

To prepare such nucleating agents, the organophosphorus compound can be combined with one or more solvents and optionally one or more organic metal salts (or inorganic metal oxides, metal hydroxides or metal carbonates) and/or weak organic bases. This mixture can be added to the base resin, or the solvents can be removed. If removed, the resulting solids can be ground, preferably to less than about 710 microns in diameter, or less than about 350 microns. Alternatively, the various ingredients can be dry-blended, and combined directly with the base resin, or melted, solidified and ground to produce the nucleant formulation which can then be added to the thermoplastic polyester.

In certain embodiments, the nucleating agent is selected from: cyanuric acid, carbon black, mica talc, silica, boron nitride, clay, calcium carbonate, synthesized silicic acid and salts, metal salts of organophosphates, and kaolin. In particular embodiments, the nucleating agent is cyanuric acid.

In various embodiments, where the nucleating agent is dispersed in a liquid carrier, the liquid carrier is a plasticizer, *e.g*., a citric compound or an adipic compound, *e.g*., acetylcitrate tributyrate (CITROFLEX® A4, Vertellus, Inc., High Point, N.C.), or DBEEA (dibutoxyethoxyethyl adipate), a surfactant, *e.g*., Triton X-100, TWEEN-20, TWEEN-65, Span-40 or Span 85, a lubricant, a volatile liquid, *e.g*., chloroform, heptane, or pentane, a organic liquid or water.

In other embodiments, the nucleating agent is aluminum hydroxy diphosphate or a compound comprising a nitrogen-containing heteroaromatic core. The nitrogen-containing heteroaromatic core is pyridine, pyrimidine, pyrazine, pyridazine, triazine, or imidazole.

In particular embodiments, the nucleating agent can include aluminum hydroxy diphosphate or a compound comprising a nitrogen-containing heteroaromatic core. The nitrogen-containing heteroaromatic core is pyridine, pyrimidine, pyrazine, pyridazine, triazine, or imidazole. The nucleant can have a chemical formula selected from the group consisting of:

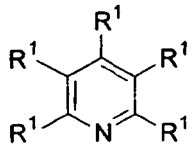
Formula 1

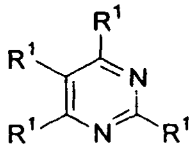
Formula 2

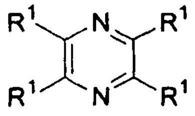
Formula 3

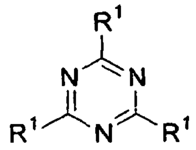
Formula 4

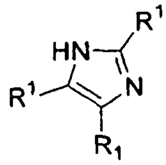
Formula 5

and

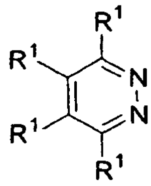

Formula 6,

and combinations thereof, wherein each R1 is independently H, $NR^2R^2$, $OR^2$, $SR^2$, $SOR^2$, $SO_2R^2$, CN, $COR^2$, $CO_2R^2$, $CONR^2R^2$, $NO_2$, F, Cl, Br, or I; and each $R^2$ is independently H or $C_1$-$C_6$ alkyl.

The nucleating agent can be a nucleating agent as described in U.S. Published Application No. US 2005/0209377, by Allen Padwa.

Another nucleating agent for use in the compositions and methods described herein are milled as described in International Application No. PCT/US2009/041023, filed April 17, 2009. Briefly, the nucleating agent is milled in a liquid carrier until at least 5% of the cumulative solid volume of the nucleating agent exists as particles with a particle size of 5 microns or less. The liquid carrier allows the nucleating agent to be wet milled. In other embodiments, the nucleating agent is milled in liquid carrier until at least 10% of the cumulative solid volume, at least 20% of the cumulative solid volume, at least 30% or at least 40%-50% of the nucleating agent can exist as particles with a particle size of 5 microns or less, 2 microns or less or 1 micron or less. In alternative embodiments, the nucleating agents is milled by other methods, such as jet milling and the like. Additionally, other methods can be utilized that reduce the particle size.

In poly-3-hydroxybutyrate compositions, for example, plasticizers are often used to change the glass transition temperature and modulus of the composition, but surfactants may also be used. Lubricants may also be used, *e.g.*, in injection molding applications. Plasticizers, surfactants and lubricants may all therefore be included in the overall polymeric composition.

The polymeric composition can include one or more plasticizers. Examples of plasticizers include phthalic compounds (including, but not limited to, dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate, and n-decyl phthalate), phosphoric compounds (including, but not limited to, tricresyl phosphate, trioctyl phosphate, triphenyl phosphate, octyl diphenyl phosphate, cresyl diphenyl phosphate, and trichloroethyl phosphate), adipic compounds (including, but not limited to, dibutoxyethoxyethyl adipate (DBEEA), dioctyl adipate, diisooctyl adipate, di-n-octyl adipate, didecyl adipate, diisodecyl adipate, n-octyl n-decyl adipate, n-heptyl adipate, and n-nonyl adipate), sebacic compounds (including, but not limited to, dibutyl sebacate, dioctyl sebacate, diisooctyl sebacate, and butyl benzyl sebacate), azelaic compounds, citric compounds (including, but not limited to, triethyl citrate, acetyl triethyl citrate, tributyl citrate, acetyl tributyl citrate, and acetyl trioctyl citrate), glycolic compounds (including, but not limited to, methyl phthalyl ethyl glycolate, ethyl phthalyl ethyl glycolate, and butyl phthalyl ethyl glycolate), trimellitic compounds (including, but not limited to, trioctyl trimellitate and tri-n-octyl n-decyl trimellitate), phthalic isomer compounds (including, but not limited to, dioctyl isophthalate and dioctyl terephthalate), ricinoleic compounds (including, but not limited to, methyl acetyl, recinoleate and butyl acetyl recinoleate), polyester compounds (including, but not limited to reaction products of diols

selected from butane diol, ethylene glycol, propane 1,2 diol, propane 1,3 diol, polyethylene glycol, glycerol, diacids selected from adipic acid, succinic acid, succinic anhydride and hydroxyacids such as hydroxystearic acid, epoxidized soy bean oil, chlorinated paraffins, chlorinated fatty acid esters, fatty acid compounds, plant oils, pigments, and acrylic compounds. The plasticizers may be used either alone respectively or in combinations with each other.

One or more lubricants can also be added to the polymeric composition. Lubricants are normally used to reduce sticking to hot processing metal surfaces and can include polyethylene, paraffin oils, and paraffin waxes in combination with metal stearates. Other lubricants include stearic acid, amide waxes, ester waxes, metal carboxylates, and carboxylic acids. Lubricants are normally added to polymers in the range of about 0.1 percent to about 1 percent by weight, generally from about 0.7 percent to about 0.8 percent by weight of the compound. Solid lubricants can be warmed and melted before or during processing of the blend.

The polymeric composition can include one or more surfactants. Surfactants are generally used to de-dust, lubricate, reduce surface tension, and/or densify. Examples of surfactants include, but are not limited to mineral oil, castor oil, and soybean oil. One mineral oil surfactant is DRAKEOL 34, available from Penreco (Dickinson, Texas, USA). MAXSPERSE W-6000 and W-3000 solid surfactants are available from Chemax Polymer Additives (Piedmont, South Carolina, USA). Nionic ionic surfactants with HLB values ranging from about 2 to about 16 can be used examples being TWEEN-20, TWEEN-65, Span-40 and Span 86.

Anionic surfactants include aliphatic carboxylic acids such as lauric acid, myristic acid, palmitic acid, stearic acid, and oleic acid; fatty acid soaps such as sodium salts or potassium salts of the above aliphatic carboxylic acids; N-acyl-N-methylglycine salts, N-acyl-N-methyl-beta-alanine salts, N-acylglutamic acid salts, polyoxyethylene alkyl ether carboxylic acid salts, acylated peptides, alkylbenzenesulfonic acid salts, alkylnaphthalenesulfonic acid salts, naphthalenesulfonic acid salt-formalin polycondensation products, melaminesulfonic acid salt-formalin polycondensation products, dialkylsulfosuccinic acid ester salts, alkyl sulfosuccinate disalts, polyoxyethylene alkylsulfosuccinic acid disalts, alkylsulfoacetic acid salts, (alpha-olefinsulfonic acid salts, N-acylmethyltaurine salts, sodium dimethyl 5-sulfoisophthalate, sulfated oil, higher alcohol sulfuric acid ester salts, polyoxyethylene alkyl ether sulfuric acid salts, secondary higher alcohol ethoxysulfates, polyoxyethylene alkyl phenyl ether sulfuric acid salts, monoglysulfate, sulfuric acid ester salts of fatty acid alkylolamides, polyoxyethylene alkyl ether phosphoric acid salts, polyoxyethylene alkyl phenyl ether phosphoric acid salts, alkyl phosphoric acid salts, sodium alkylamine oxide bistridecylsulfosuccinates, sodium dioctylsulfosuccinate, sodium dihexylsulfosuccinate, sodium dicyclohexylsulfosuccinate, sodium diamylsulfosuccinate, sodium diisobutylsulfosuccinate, alkylamine guanidine polyoxyethanol, disodium sulfosuccinate ethoxylated alcohol half esters, disodium sulfosuccinate ethoxylated nonylphenol half esters, disodium isodecylsulfosuccinate, disodium N-octadecylsulfosuccinamide, tetrasodium N-(1,2-dicarboxyethyl)-N-octadecylsulfosuccinamide, disodium mono- or didodecyldiphenyl oxide disulfonates, sodium diisopropylnaphthalenesulfonate, and neutralized condensed products from sodium naphthalenesulfonate.

Another optional functional component is a nanoclay or organically modified clay. There are several types of clays used in polymeric compositions, including cationic or medium or high cation exchange capacity. The cation exchange capacity is generally reported as the number of milliequivalents of exchangeable base which can be exchanged per 100 grams of clay. The cation exchange capacity varies from about 50 to about 150 depending on the type of clay. Examples of clays which can be organically modified include sepiolite, attapulgite, montmorillonites, bentonites, saponite and nentronite.

Organically modified clays are known in the art and are also described in U.S. Patent No. 2,531,440. Examples include montmorillonite clay modified with ternary or quaternary ammonunium salts. Nanoclays are commercially available from Southern Clay Products, Inc. of Gonzales, Texas, USA (such as, but not limited to, CLOISITE®NA$^+$ (a natural montmorillonite), CLOISITE® 93A & 30B (a natural montmorillonite modified with ternary ammonium salts), and CLOISITE® 10A, 15A, 20A, and 25A (a natural montmorillonite modified with quaternary ammonium salts).

Montmorillonite clay is the most common member of the smectite family of nanoclays. Smectites have a unique morphology, featuring one dimension in the nanometer range. The montmorillonite clay particle is often called a platelet, which is a sheet-like structure where the dimensions in two directions far exceed the particle's thickness. The length and breadth of the particles range from 1.5 microns down to a few tenths of a micrometer. However, the thickness is only about a nanometer. These dimensions result in extremely high average aspect ratios (on the order of 200 - 500). Moreover, the very small size and thickness mean that a single gram of clay can contain over a million individual particles.

The clay initially comprises agglomerates of platelet layers. Nanoclay becomes commercially useful if processed into an intercalate, which separates (exfoliates) the platelets in the agglomerates. In an intercalate, the clay is mixed with an intercalate under conditions which cause the platelets to separate and the intercalate to enter into the spaces between the platelets. The intercalant is often an organic or semi-organic chemical capable of entering the montmorillonite clay gallery and bonding to the surface of the platelets. An intercalate is therefore a clay-chemical complex wherein the clay gallery spacing has increased, due to the process of surface modification by the substance (the intercalant). Under the proper conditions of temperature and shear, the platelet agglomerates are capable of exfoliating (separating), allowing the intercalant to enter between them, separating and exfoliating them.

The platelets can be exfoliated (separated) by a number of processes. In one exfoliation procedure, described in U.S. Patent No. 6,699,320, the process utilizes a dispersant to enter between the layers of clay platelets and separate them. In this process, the clay is mixed with a dispersant (*e.g.*, castor wax), and then heated in the barrel of an extruder to a temperature above the melting point of the dispersant (*e.g.*, 82°C - 104°C in the case of castor wax). The heated mixture is then agitated, *e.g.*, with a deep flighted screw. This heating and agitating disperses the platelet layers and delaminates the platelets from neighboring layers, by allowing molecules of dispersant to enter between the layers. The layers are considered "exfoliated" when the separation between the platelet layers is large enough such that there is no longer sufficient attraction between layers to cause uniform spacing between the layers.

In the process described in U.S. Patent No. 6,699,320, the screw within the extruder moves the clay-wax mixture out of an extrusion die opening in the form of a hot slurry. Two chilled chrome-plated rollers are then used to calender the mixture to a predetermined thickness that is determined by the spacing between the rollers. The mixture is cooled to solidify the wax. The clay-wax mixture is then scraped off the rollers and falls as flakes onto a conveyer belt. The flakes can be tumbled to further reduce their size, and used immediately, or stored.

Because of the very small size of the clay particles, nanoclays are difficult to handle, and may pose health risks. They are therefore sometimes processed into "masterbatches," in which the clay is dispersed into a polymer resin at a high concentration. Portions of the masterbatch are then added in measured quantities to polymer that does not contain nanoclay, to produce a polymer containing a precise amount of the nanoclay.

One montmorillonite clay is CLOISITE® 25A, which can be obtained from Southern Clay Products of Gonzales, texas, USA. A typical dry particle size distribution of CLOISITE® 25A is 10% less than 2 microns, 50% less than 6 microns, and 90% less than 13 microns.

Other nanoclays are identified in U.S. Patent No. 6,414,070 (Kausch et al.). and PCT Patent Publication Nos. WO 00/66657 and WO 00/68312.

For the fabrication of useful articles, a polymeric composition described herein is created at a temperature above the crystalline melting point of the thermoplastic but below the decomposition point of any of the ingredients of the composition. Alternatively, a pre-made blend composition of the present invention is simply heated to such temperature. Such processing can be performed using any art-known technique used to make injection molded parts, film, sheet, fiber and foam.

Items and products made with the polymeric compositions as described herein can also be subjected to post-fabrication heat treatment (*e.g.*, annealing) to improve the physical properties (such as toughness) of the article. Such methods are described in PCT Patent Publication No. WO 2010/008445 (by Allen Padwa and Yelena Kann, which was published in English on January 21, 2010 and designates the United States), and International Application No. PCT/US09/069444 (by Yelena Kann, which was filed on December 23, 1999 in English and designates the United States).

The polymeric compositions of the present invention can be used to create, without limitation, a wide variety of useful products, *e.g.*, automotive, consumer durable, construction, electrical, medical, and packaging products. For instance, the polymeric compositions can be used to make, without limitation, films (*e.g.*, packaging films, agricultural film, mulch film, erosion control, hay bale wrap, slit film, food wrap, pallet wrap, protective automobile and appliance wrap, etc.), golf tees, caps and closures, agricultural supports and stakes, paper and board coatings (*e.g.*, for cups, plates, boxes, etc.), thermoformed products (*e.g.*, trays, containers, yoghurt pots, plant pots, noodle bowls, moldings, etc.), housings (*e.g.,* for electronics items, *e.g.*, cell phones, PDA cases, music player cases, computer cases and the like), bags (*e.g.*, trash bags, grocery bags, food bags, compost bags, etc.), hygiene articles (*e.g.*, diapers, feminine hygiene products, incontinence products, disposable wipes, etc.), coatings for pelleted products (*e.g.*, pelleted fertilizer, herbicides, pesticides, seeds, etc.).

The invention will be further described in the following examples, which do not limit the scope of the invention defined by the claims.

## EXAMPLES

Testing Methods

A. Measurement of Thermal Stability via DSC Measurement of kD

Two different tests can be used to evaluate the thermal stability of different lots of polymer. The first test is the "kD" test. In this test, a polymer specimen (*e.g.*, 2 mg) is exposed to 170°C in a DSC test chamber (*e.g.*, a TA Instrument Q-2000), and the specimen heated for 0, 5 and 10 minutes. The cooled sample cup is unsealed and the sample dissolved in chloroform to the concentration required for gel permeation chromatography (GPC). GPC is used to measure Mw, Mn and Mz molecular weight averages of polymers, relative to a 900K polystyrene control.

The best-fit straight line between the reciprocal of the weight-average molecular weight (1/Mw) and time is plotted. The slope of this line is "kD," and this gives a measure of thermal stability. A smaller kD number translates to

better thermal stability.

B. Measurement of Thermal Stability via Capillary Rheometry

The thermal stability can also be measured using a capillary rheometry test. Capillary rheometers are generally used to measure the melt viscosity of plastics as a function of shear concentration (typically from about 0.1 to 10,000 $sec^{-1}$). However, measuring the melt viscosity of PHA polymers is complicated, because the molecular weight degradation reaction occurs at the test conditions themselves, which results in decreasing viscosity as a function of melt dwell time.

This obstacle can be overcome by measuring the melt viscosity at various dwell times and extrapolating back to zero time (this is described in ASTM D3835-08, Appendix XI). In the tests used herein, measurements are performed at 180°C. The material is preheated for 240 seconds (4 minutes) before the testing is commenced, and a capillary die of 0.75 mm diameter and 30 mm length is used. The measured apparent viscosity (as calculated from pressure and concentration) decreases with increasing dwell time in the rheometer. When measured apparent viscosity (at an apparent shear concentration of 100 $s^{-1}$) is plotted as a function of time, the slope of this best-fit straight line is used as another indicator of thermal stability. This slope is referred to as "capillary viscosity stability." The capillary viscosity stability number is negative, because viscosity decreases with time, and a larger magnitude (*i.e.,* a smaller number) corresponds to poorer thermal stability. In other words, a negative number closer to zero is more desirable, and a larger negative number is less desirable.

C. Measurement of Thermal Stability via Torsional Rheometry

The melt rheology of PHA polymers can also be measured using torsional rheometers. The measured complex viscosity at 0.25 rad/s can be used as an additional measure of molecular weight and melt stability of the polymer. The higher the measured viscosity (@ 0.25 rad/s), the higher is the absolute molecular weight of the melt.

D. Measurement of Trace Metal Impurities by ICP-MS

ICP-MS analysis of the calcium carbonate powders was carried out by using a Perkin Elmer Sciex Elan 6100. The calcium carbonate samples were first dissolved in 10% HCl solution. Then the solution was then introduced into the ICP-MS instrument. A 60 element quantitative scan was performed on each calcium carbonate powder to determine the trace metal content. The detection limits for most elements were 2ppm.

Example 1. ICP-MS Analysis of Calcium Carbonate Powders.

Below is a table summarizing the results of ICP-MS analysis of the calcium carbonate powders from the brands MULTIFLEX-MM®, EM FORCE®Bio, and OMYACARB®. The table shows that the MULTIFLEX-MM® calcium carbonate and EM FORCE® Bio calcium carbonate powders have lower total trace metal content as well as lower magnesium, iron, sodium, potassium and zirconia than the OMYACARB UF-FL® and UTF-FL calcium carbonate.

Table 1. Summary of ICP-MS results on calcium carbonate powders.

| | Concentration (ppm) | | | |
|---|---|---|---|---|
| Element | EM force Bio | Multiflex MM | UF-FL | UTF-FL |
| Sodium | 66 | 130 | 713 | 681 |
| Magnesium | 1437 | 1069 | 3971 | 3428 |
| Aluminum | 78 | 209 | 393 | 383 |
| Phosphorus | 195 | 38 | 47 | <2 |
| Potassium | 18 | 36 | 300 | 260 |
| Titanium | 1320 | 1250 | 1345 | 1519 |
| Manganese | 19 | 36 | 29 | 29 |
| Iron | 447 | 139 | 587 | 735 |
| Copper | 20 | 3 | <2 | 3 |
| Nickel | 3 | <2 | <2 | <2 |
| Zinc | 11 | 8 | 9 | 4 |
| Arsenic | 4 | <2 | <2 | <2 |
| Strontium | 188 | <2 | 188 | 197 |

(continued)

| | Concentration (ppm) | | | |
|---|---|---|---|---|
| Element | EM force Bio | Multiflex MM | UF-FL | UTF-FL |
| Barium | 3 | 7 | 5 | 5 |
| Lead | <2 | 2 | <2 | <2 |
| Cerium | <2 | <2 | 3 | 4 |
| Zirconium | <2 | <2 | 29 | 22 |
| Total | 3809 | 2927 | 7619 | 7270 |

Example 2: Production and Testing of PHA Polymer Pellets, and Production of Film Containing with Low Purity Calcium Carbonate.

In this Example, three polyhydroxyalkanoate formulations were made, tested for their molecular weight, and converted into film.

The table below shows the compositions of the three blends. The first contains no calcium carbonate, while the second and third contain two different types of mined/ground calcium carbonate. OMYACARB® UFT-FL calcium carbonate is a ground calcium carbonate that is coated. OMYACARB® 3-FL calcium carbonate is a ground calcium carbonate that is not coated.

Table 2. Polyhydroxyalkanoate formulations containing low purity calcium carbonate.

| Formulation | 1-1 | 1-2 | 1-3 |
|---|---|---|---|
| PHA Blend (wt%) | 97 | 87 | 87 |
| Nucleant Masterbatch (wt%) | 3 | 3 | 3 |
| OMYACARB® UFT-FL (ground, coated) | 0 | 10 | 0 |
| OMYACARB® 3-FL (ground, uncoated) | 0 | 0 | 10 |

In the above table, the final PHA is poly(3-hydroxybutyrate-co-4-hydroxybutyrate) with 10-12% by weight 4HB content. The nucleant masterbatch was cyanuric acid that had been previously compounded at a concentration of 33% (by weight) into a base resin (polymer) of 3-hydroxybutanoic acid and 4-hydroxybutanoic acid, and pelleted.

The above formulations were made into pellets using a 27 mm MAXX Leistritz twin-screw extruder using the following temperature profile: 10 zones set at 175 / 175 / 170 / 170 / 170 / 165 / 165 / 165 / 160 / 160°C. The extrusion concentration was set at 50 lbs/hr and the extruder was operated at 150 rpm. The Leistritz process data for producing the above pellets are given in the table below.

Table 3. Leistritz process data for polyhydroxyalkanoate formulations containing low purity calcium carbonate.

| Process Variable | Formulation 1-1 (control) | Formulation 1-2 (Coated $CaCO_3$) | Formulation 1-3 (Uncoated $CaCO_3$) |
|---|---|---|---|
| Rate (lbs/hr) | 50 | 50 | 50 |
| Screw RPM | 150 | 150 | 150 |
| Melt Temp (°C) | 183 | 191 | 189 |
| Melt Pressure (psi) | 1465 | 1570 | 1495 |
| Screw Torque (%) Pellet & Film Process | 27 | 28 | 27 |
| Data: | | | |
| Molecular Weight (kg/mol) | 408 | 429 | 442 |
| Capillary Viscosity Stability | -0.13 | -0.21 | -0.17 |
| Maximum Attainable Film Take-up Speed | 20 | 32 | 45 |

The weight-average molecular weight (Mw) (as measured by GPC) for the control polymer (Formulation 1-1) was determined to be about 408 kg/mol; Mw for Formulation 2 and Formulation 3 were determined to be 429 kg/mol

and 442 kg/mol, respectively.

The pellets were then converted into cast film using a ½ inch RandCastle extruder and take-up assembly using the following temperature profile: 360 / 355 / 350°F on the extruder and 335°F on the adapter and die. The extruder was operated at about 25 rpm. The primary casting roll temperature was set at about 55°C. At these conditions, the take-up roll speed (or the drawdown ratio) was increased until the onset of film sticking was observed, and the take-up roll speed was noted. This take-up roll speed was determined to be the "maximum attainable take-up speed."

The "maximum attainable take-up speed" is shown in the table above. Addition of 10% coated calcium carbonate OMYACARB® UFT-FL calcium carbonate caused an improvement in speed of processing, in that the maximum attainable take-up speed was increased by 60% relative to the control formulation. The performance of uncoated calcium carbonate was even better. The addition of 10% OMYACARB® 3-FL calcium carbonate caused an increase in the maximum attainable take-up speed of 125% relative to the control formulation.

This clearly demonstrates the advantages of adding calcium carbonate to PHB copolymers in the form of higher line speeds and thinner films. Therefore, adding calcium carbonate enables one to operate cast and blown film lines at considerably higher concentrations to produce thinner films that were otherwise not possible.

However, while the addition of these two grades of calcium carbonate showed improvements in cast film processing, the thermal stability of the compositions was compromised. The capillary viscosity stability as measured by capillary rheometry for the three samples was also measured and is shown in the table above. The formulation containing coated calcium carbonate OMYACARB® UFT-FL calcium carbonate exhibited about 60% worse stability relative to the control formulation, while uncoated calcium carbonate OMYACARB® 3-FL calcium carbonate exhibited about 30% worse stability relative to the control formulation.

Therefore, while low purity calcium carbonates can provide some processing advantages (particularly in film in the form of line speed), their addition to polyhydroxyalkanoate formulations comes at the expense of poorer thermal stability.

Example 3. Production and Testing of PHA Polymer Pellets, and Production of Film Containing Low and High Purity Calcium Carbonate.

This example examined the effects of low versus high purity calcium carbonates on line speed and melt stability. Seven polymer formulations containing calcium carbonate were made, and these are set out in the table below. In these formulations, the low purity calcium carbonates are OMYACARB® 3-FL calcium carbonate, OMYACARB® UF-FL calcium carbonate and OMYACARB® UFT-FL calcium carbonate (Omya Inc., Proctor, Vermont, USA). The high purity calcium carbonates are EMFORCE® Bio calcium carbonates, MULTIFLEX-MM® calcium carbonates, ULTRA-PFLEX® calcium carbonates and THIXO-CARB® calcium carbonates (from Specialty Minerals Inc., Bethlehem, PA, USA).

Table 4. PHA formulations containing low and high purity calcium carbonate.

| Formulation | 2-1 | 2-2 | 2-3 | 2-4 | 2-5 | 2-6 | 2-7 | 2-8 |
|---|---|---|---|---|---|---|---|---|
| PHA blend (wt%) | 86 | 76 | 76 | 76 | 76 | 76 | 76 | 76 |
| Nucleant Masterbatch (Wt%) | 3 | 3 | 3 | 3 | 3 | 3 | 3 | 3 |
| Slip-Antiblock Masterbatch (Wt%) | 3 | 3 | 3 | 3 | 3 | 3 | 3 | 3 |
| Peroxide (Wt%) | 0.15 | 0.15 | 0.15 | 0.15 | 0.15 | 0.15 | 0.15 | 0.15 |
| CITROFLEX® A4 (Wt%) | 7.85 | 7.85 | 7.85 | 7.85 | 7.85 | 7.85 | 7.85 | 7.85 |
| OMYACARB® 3-FL $CaCO_3$ (Wt%) | - | 10 | - | - | - | - | - | - |
| OMYACARB® UF-FL $CaCO_3$ (Wt%) | - | - | 10 | - | - | - | - | - |
| OMYACARB® UFT-FL $CaCO_3$ (Wt%) | - | - | - | 10 | - | - | - | - |
| EMFORCE® Bio $CaCO_3$Wt%) | - | - | - | - | 10 | - | - | - |
| MULTIFLEX-MM® $CaCO_3$ (Wt%) | - | - | - | - | - | 10 | - | - |
| ULTRA-PFLEX® $CaCO_3$ (Wt%) | - | - | - | - | - | - | 10 | - |
| THIXO-CARB® 500 $CaCO_3$ (Wt%) | - | - | - | - | - | - | - | 10 |

In the above table, the final PHA is poly(3-hydroxybutyrate-co-4-hydroxybutyrate) with 10-12% by weight 4HB content. The nucleant masterbatch was cyanuric acid that had been previously compounded at a concentration of 33% (by weight) into a base polymer resin of 3-hydroxybutanoic acid and 4-hydroxybutanoic acid, and pelleted. The slip anti-block masterbatch was a mixture of erucamide (20% by weight) diatomaceous earth (15% by weight) nucleant masterbatch (3% by weight), pelleted into PHA (62% by weight). The peroxide used was Triganox T117 (Azko Nobel), which

was dissolved in the CITROFLEX® A4 plasticizer prior to being pumped into the compounding extruder.

The above blends were produced using a 27 mm MAXX Leistritz twin-screw extruder using the following temperature profile: Ten zones set at 175 / 175 / 170 / 170 / 170 / 165 / 165 / 165 / 160 / 160°C. The extrusion concentration was set at 85 lbs/hr and the extruder was operated at 130 rpm. The melt temperature was in the range 190-199°C while the melt pressure was in the range of 1744 to 2062 psi for the above series.

The above blends were processed into cast film using a 1.25 inch Killion extruder fitted with a 10-inch coathanger die with the primary casting roll heated to about 55°C. The extruder was operated at about 35 rpm with the extruder and die zones set to 360 / 355 / 345 / 340 / 330°F. Under these conditions, the cast film line speed was increased slowly until the onset of sticking occurred, and the "maximum attainable take-up speed" was noted as for Example 3, above. This provided a good ranking of the processing performance of the various calcium carbonate grades in cast film processing. The films' tensile strength in the machine direction (MD) was also measured.

The results are shown in the table below:

Table 5. Comparison of line speed and stability in PHA formulations containing low and high purity calcium carbonates.

| Form ula tion | Calcium Carbonate | Max. Take-Up Speed (feet/min.) | % Chang in Max. Take-up Speed | Capillary Viscosity Stability | % Change in Viscosity Stability | Film Tensile Strength along MD (MPa) |
|---|---|---|---|---|---|---|
| 2-1 | none | 13 | - | -0.14 | - | 24.8 |
| 2-2 | OMYACARB® 3-FL $CaCO_3$ | 28 | + 115% | -0.18 | 29% worse | 21.6 |
| 2-3 | OMYACARB® UF-FL $CaCO_3$ | 28 | + 115% | -0.19 | 36% worse | 21.5 |
| 2-4 | OMYACARB® UFT-FL $CaCO_3$ | 28 | + 115% | -0.19 | 36% worse | 21.5 |
| 2-5 | EMForce Bio $CaCO_3$ | 31 | + 138% | -0.14 | No change | 22.2 |
| 2-6 | MULTIFLEX-MM® $CaCO_3$ | 55 | + 323% | -0.09 | 36% better | 19.8 |
| 2-7 | ULTRA-PFLEX® $CaCO_3$ | 55 | + 323% | -0.15 | 7% worse | 19.6 |
| 2-8 | THIXO-CARB® 500 $CaCO_3$ | 24 | + 85% | -0.15 | 7% worse | 21.7 |

All three low purity carbonates (the OMYACARB calcium carbonates) showed similar improvements in processing speed, but also with similar drops in stability. Tensile strength was also compromised to varying degrees.

While all of the calcium carbonates (low and high purity) showed considerable improvement in processing linespeeds, the MULTIFLEX-MM® calcium carbonate and ULTRA-PFLEX® calcium carbonate grades were exceptional in terms of the maximum attainable line speed.

In particular, the EMFORCE® Bio calcium carbonate and MULTIFLEX-MM® grades calcium carbonate were impressive in their ability to both increase line speed, and neither had any negative effect on thermal stability. Surprisingly, the addition of MULTIFLEX-MM® calcium carbonate improved stability. Adding MULTIFLEX-MM® calcium carbonate not only enables very high linespeeds to be achieved, but it also improves the inherent thermal stability of the polymer.

These results show that while all calcium carbonates showed improved line speeds, only certain calcium carbonates (high purity) improved the line speed without significant negative effects on stability.

Example 4. Production and Testing of PHA Polymer Pellets Containing Low and High Purity Calcium Carbonate.

In this example, three PHA blends were made, having the formulations set out in the table below.

Table 6. Formulations of PHA blends containing ground or precipitated calcium carbonate.

| Formulation | 2-1 | 3-1 | 3-2 |
|---|---|---|---|
| PHA Blend (Wt%) | 86 | 81 | 81 |
| Nucleant Masterbatch (Wt%) | 3 | 3 | 3 |
| Slip Antiblock Masterbatch (Wt%) | 3 | 3 | 3 |

(continued)

| Formulation | 2-1 | 3-1 | 3-2 |
|---|---|---|---|
| Peroxide (Wt%) | 0.15 | 0.15 | 0.15 |
| CITROFLEX® A4 (Wt%) | 7.85 | 7.85 | 7.85 |
| OMYACARB® UF-FL $CaCO_3$ (Wt%) | - | 5 | - |
| MULTIFLEX-MM® $CaCO_3$ (Wt%) | - | - | 5 |
| Capillary Melt Stability | -0.14 | -0.18 | -0.09 |
| % Change in Viscosity Stability | - | - 29% | + 38% |

In the above table, the final PHA is poly(3-hydroxybutyrate-co-4-hydroxybutyrate) with 10-12% by weight 4HB content. The nucleant masterbatch was cyanuric acid that had been previously compounded at a concentration of 33% (by weight) into a base resin of 3-hydroxybutanoic acid and 4-hydroxybutanoic acid, and pelleted. The slip anti-block masterbatch was a mixture of erucamide (20% by weight) diatomaceous earth (15% by weight) nucleant masterbatch (3% by weight), pelleted into PHA (62% by weight). The peroxide was Triganox T117 (Azko Nobel), which was dissolved in the CITROFLEX® A4 plasticizer prior to being pumped into the compounding extruder.

The above blends were produced using a 27 mm MAXX Leistritz twin-screw extruder using the following temperature profile: 10 zones set at 175 / 175 / 170 / 170 / 170 / 165 / 165 / 165 / 160 / 160°C. The extrusion concentration was set at 85 lbs/hr and the extruder was operated at 150 rpm. The melt temperature was in the range 187-197 °C while the melt pressure was in the range 2072-2352 psi for the above series.

The capillary viscosity stability for the three types of pellets was measured. The capillary melt stability of the control sample, Formulation 2-1, is about -0.14. When the composition of the control sample was adjusted to include some OMYACARB® UF-FL calcium carbonate, the capillary viscosity stability changed to -0.18. In other words, the thermal stability of the composition became worse (by about 29%) when OMYACARB® UF-FL calcium carbonate was added. However, instead of the OMYACARB® UF-FL calcium carbonate, if about the same amount of the MULTIFLEX-MM® calcium carbonate was added (as in Formulation 3-2), the capillary viscosity stability actually improved when compared to the control; the capillary viscosity stability of the Formulation 3-2 sample was measured to be about -0.09, an improvement of about 38%.

This is another example that shows while adding any calcium carbonate will improve the film processing characteristics of PHB copolymers, only calcium carbonates with low levels of trace impurities will preserve (or even improve) the thermal melt stability of the polymer.

Example 5. Production and Testing of PHA Polymer Pellets Containing Different Levels of High Purity Calcium Carbonate.

In this example, a series of blends with the following composition were produced:

Table 7. Formulations of PHA blends containing varying levels of precipitated calcium carbonate.

| Formulation | 4-1 | 4-2 | 4-3 | 4-4 | 4-5 |
|---|---|---|---|---|---|
| PHA Blend (Wt%) | 97 | 92 | 87 | 92 | 87 |
| Nucleant Masterbatch (Wt%) | 3 | 3 | 3 | 3 | 3 |
| MULTIFLEX-MM® $CaCO_3$ (Wt%) | - | 5 | 10 | - | - |
| EMFORCE® Bio $CaCO_3$ (Wt%) | - | - | - | 5 | 10 |
| kD | 3.5E-08 | 3.2E-08 | 3.2E-08 | 3.5E-08 | 2.8E-08 |
| Capillary Viscosity Stability | -0.22 | -0.11 | -0.10 | -0.24 | -0.30 |

In the above table, the final PHA is poly(3-hydroxybutyrate-co-4-hydroxybutyrate) with 10-12% by weight 4HB content. The nucleant masterbatch was cyanuric acid that had been previously compounded at a concentration of 33% (by weight) into a base resin of 3-hydroxybutanoic acid and 4-hydroxybutanoic acid, and pelleted.

The above blends were produced using a 27 mm MAXX Leistritz twin-screw extruder using the following temperature profile: 10 zones set at 175 / 175 / 170 / 170 / 170 / 165 / 165 / 165 / 160 / 160°C. The extrusion concentration was set at 60 lbs/hr and the extruder was operated at 100 rpm. The melt temperature was in the range 207-210 °C while the melt pressure was in the range 1935-2187 psi for the above series.

The capillary viscosity stability of the control sample, Formulation 4-1, is about - 0.22. In keeping with results of Example 3, EMforce Bio had little negative affect on stability. However, when the composition of the control sample was adjusted to include some MULTIFLEX-MM® calcium carbonate, the capillary viscosity stability changed to about

-0.10 reflecting a big improvement in thermal stability.

Example 6. Effect of Various Calcium Carbonates in Injection Molding.

Samples of low and high purity calcium carbonate and with various particle size and surface treatment were obtained from Specialty Mineral Inc. and Omya. These included ULTRA-PFLEX® calcium carbonate, MULTIFLEX-MM® calcium carbonate, EMFORCE® Bio calcium carbonate, OMYACARB® 3-FL calcium carbonate, OMYACARB® UF-FL calcium carbonate, OMYACARB® UFT-FL calcium carbonate.

Formulations with these calcium carbonates and other standard additives including mold release, plasticizer and nucleating agent, were compounded on 27 mm twin screw Leistritz extruder. A typical temperature profile of the barrel setting, from hopper to die, is 175°C / 175°C / 175°C / 175°C / 175°C / 170°C / 170°C / 170°C / 170°C / 170°C / 170°C, with screw speed at 100 rpm and throughput at 40 lbs per hour.

Injection molding was carried out on a Roboshot $\alpha$-50C (FANUC Ltd., Japan) with barrel volume to shot size at about 2, where the melt temperature was controlled at about 170°C by adjusting the barrel temperature setting and screw rpm. A standard ASTM mold with both a tensile bar and an Izod bar was used. Flash was observed by packing the mold at 50% of the peak injection pressure.

Tensile properties were measured on an Instron 3345 Single Column Testing System (Instron, Norwood, MA, USA) according to ASTM D638-08, and notched Izod was measured according to ASTM D256-06 A. Melt stability is measured on capillary rheometer according to ASTM D3835-08.

The two precipitated calcium carbonates ULTRA-PFLEX® and MULTIFLEX- MM® were compared in injection molding. The formulations made and the results obtained are provided in the table below.

Table 8. Comparison of two precipitated calcium carbonates.

| Formulation | 5-1 | 5-2 | 5-3 | 5-4 | 5-5 | 5-6 | 5-7 |
|---|---|---|---|---|---|---|---|
| PHA blend (Wt%) | 89.7 | 84.7 | 75.7 | 89.7 | 84.7 | 75.7 | 94.7 |
| Acrowax (Wt%) | 0.3 | 0.3 | 0.3 | 0.3 | 0.3 | 0.3 | 0.3 |
| CITROFLEX® A4 (Wt%) | 2.0 | 2.0 | 2.0 | 2.0 | 2.0 | 2.0 | 2.0 |
| Nucleant Masterbatch (Wt%) | 3.0 | 3.0 | 2.0 | 3.0 | 3.0 | 2.0 | 3.0 |
| MULTIFLEX-MM® $CaCO_3$ (Wt%) | 5.0 | 10.0 | 20.0 | - | - | - | - |
| ULTRA-PFLEX® $CaCO_3$ (Wt%) | | - | - | 5.0 | 10.0 | 20.0 | - |
| Peak Injection Pressure (0.5 IPS) | 9400 | 9400 | 9200 | 10200 | 9100 | 8800 | 9600 |
| Peak Injection Pressure (3 IPS) | 12950 | 12800 | 12500 | 12500 | 12600 | 12300 | 12900 |
| Peak Injection Pressure (6 IPS) | 14200 | 14600 | 14200 | 14200 | 14200 | 14000 | 14500 |
| Flash, ranking (1=best, 8=worst) | 3 | 2 | 1 | 5 | 7 | 8 | 6 |
| Viscosity at 1000 s-1 (Pa.s) | 298 | 347 | 256 | 306 | 388 | 273 | 332 |
| Viscosity at 300 s-1 (Pa.s) | 703 | 844 | 701 | 855 | 980 | 850 | 853 |
| Viscosity at 100 s-1 (Pa.s) | 1777 | 2277 | 1886 | 2670 | 2693 | 2197 | 1819 |
| Capillary Viscosity Stability | -0.06 | -0.09 | -0.13 | -0.12 | -0.13 | -0.25 | -0.04 |
| Tensile Modulus, MPa | 1914.0 | 2089.6 | 2353.7 | 1895.5 | 2065.9 | 2451.6 | 1787.3 |
| Tensile Stress at Yield, MPa | 31.9 | 31.2 | 30.4 | 31.6 | 30.6 | 29.3 | 32.3 |
| Tensile Strain at Yield, % | 10.1 | 8.2 | 5.4 | 10.1 | 8.0 | 4.4 | 11.8 |
| Tensile stress at break, MPa | 27.6 | 28.0 | 28.2 | 27.8 | 26.8 | 25.8 | 28.8 |
| Tensile strain at break, % | 19.4 | 12.7 | 7.1 | 17.6 | 13.6 | 6.5 | 19.4 |
| Notched Izod (ft-lb/in) | 0.53 | 0.50 | 0.50 | 0.61 | 0.53 | 0.50 | 0.70 |

In the above table, the final PHA is poly(3-hydroxybutyrate-co-4-hydroxybutyrate) with 10-12% by weight 4HB content. The nucleant masterbatch was cyanuric acid that had been previously compounded at a concentration of 33% (by weight) into a base resin of 3-hydroxybutanoic acid and 4-hydroxybutanoic acid, and pelleted.

With the increase in concentration of MULTIFLEX-MM® up to 20%, there is a steady decrease in flash; however, for ULTRA-PFLEX®, only at a low concentration of about 5%, there is a slight decrease in flash. Above that concentration, the degree of flash worsens.

With regard to capillary viscosity stability, with the addition of both calcium carbonates there is a trend of decreasing capillary viscosity stability. Formulations containing ULTRA-PFLEX®, a coated precipitated calcium carbonate, had worse capillary viscosity stability than those made with MULTIFLEX-MM®, an uncoated precipitated calcium

carbonate.

With the addition of calcium carbonate, tensile modulus increased, but not as much as would be seen with the addition of talc (data not shown). Tensile strength slightly decreased, and impact properties (elongation and notched Izod) were negatively affected.

Example 7. Comparison of Coated or Uncoated Calcium Carbonate in Injection Molding.

In this example, MULTIFLEX-MM® was further compared with other calcium carbonates, including EMFORCE® Bio, OMYACARB® UF-FL, OMYACARB® UFT-FL and OMYACARB® 3-FL. The formulations made, and the results obtained, are summarized in the table below.

Table 9. Formulations of coated or uncoated ground calcium carbonate or precipitated carbonate in injection molding.

| Formulation | 6-1 | 6-2 | 6-3 | 6-4 | 6-5 | 6-6 |
|---|---|---|---|---|---|---|
| PHA blend | 100 | 100 | 100 | 100 | 100 | 100 |
| Acrowax concentrate (50% in PHA) | 1 | 1 | 1 | 1 | 1 | 1 |
| CITROFLEX® A4 | 3 | 3 | 3 | 3 | 3 | 3 |
| Nucleant Masterbatch | 3.3 | 3.3 | 3.3 | 3.3 | 3.3 | 3.3 |
| MULTIFLEX-MM® $CaCO_3$ | - | - | - | - | 12 | - |
| OMYACARB® UFT-FL $CaCO_3$ | - | - | - | 12 | - | - |
| OMYACARB® UF-FL $CaCO_3$ | - | - | 12 | - | - | - |
| OMYACARB® 3-FL $CaCO_3$ | - | 12 | - | - | - | - |
| EMFORCE® Bio $CaCO_3$ | 12 | - | - | - | - | - |
| Talc | 13 | 13 | 13 | 13 | 13 | 12 |
| Peak Injection Pressure (psi) | 13175 | 13500 | 13700 | 13400 | 13600 | 13100 |
| Flashing (1=best, 5=worst) | 3 | 2 | 3 | 4 | 1 | 5 |
| Viscosity at 100 s-1 (Pa.s) | 1438 | 1636 | 1613 | 1796 | 1521 | 2021 |
| Melt Stability | -0.034 | -0.055 | -0.060 | -0.072 | -0.061 | -0.062 |
| Tensile Modulus, MPa | 2353 | 2592 | 2828 | 2440 | 2594 | 2018 |
| Tensile Stress at Yield, Mpa | 30.0 | 27.2 | 27.9 | 27.8 | 27.4 | 28.6 |
| Tensile Strain at Yield, % | 9.2 | 6.8 | 6.0 | 7.3 | 6.1 | 10.8 |
| Tensile stress at break, Mpa | 25.8 | 23.3 | 24.2 | 24.6 | 25.8 | 25.9 |
| Tensile strain at break, % | 14.6 | 13.8 | 9.3 | 11.6 | 8.1 | 15.5 |
| Notched Izod (ft-lb/in) | 0.74 | 0.62 | 0.68 | 0.77 | 0.64 | 0.97 |

In the above table, the final PHA is poly(3-hydroxybutyrate-co-4- hydroxybutyrate) with 10-12% by weight 4HB content. The nucleant masterbatch was cyanuric acid that had been previously compounded at a concentration of 33% (by weight) into a base resin of 3-hydroxybutanoic acid and 4-hydroxybutanoic acid, and pelleted.

It was found that at 12 phr loading, all calcium carbonates in this series were effective in reducing flashing, but MULTIFLEX-MM® calcium carbonates was the most effective, followed by OMYACARB® 3-FL calcium carbonates, and OMYACARB® UF-FL calcium carbonates and EMFORCE® Bio calcium carbonates. On melt stability, OMYACARB® UFT-FL calcium carbonates seemed to decrease the melt stability somewhat, while other types remained the same or slightly better.

The impact properties were decreased somewhat in all cases, but EMforce Bio seemed to affect this property the least.

These results show that by using calcium carbonate with low trace metals content, it is possible to add calcium carbonate as an additive to PHA polymer formulations and obtain the benefits of improved processing, while minimizing the harmful side effects most commonly associated with use of calcium carbonate.

Example 8. Comparison of Coated and Uncoated Calcium Carbonate in Injection Molding.

In this example, the effects of EMFORCE® Bio calcium carbonate and MULTIFLEX-MM® calcium carbonate on flashing were compared further. The formulations made are listed in the table below.

Table 10. Injection Molding Formulations Containing Coated and Uncoated High Purity Calcium Carbonate.

| Formulation | 7-1 | 7-2 | 7-3 | 7-4 | 7-5 | 7-6 |
|---|---|---|---|---|---|---|
| PHA blend | 100 | 100 | 100 | 100 | 100 | 100 |
| Acrowax concentrate (50% in PHA) | 1 | 1 | 1 | 1 | 1 | 1 |
| CITROFLEX® A4 | 4 | 4 | 4 | - | - | 4 |
| Nucleant Masterbatch 1 | 6.6 | 6.6 | 6.6 | - | - | 6.6 |
| Nucleant Masterbatch 2 | - | - | - | 6 | 6 | - |
| Talc | 16 | 16 | 16 | 16 | 16 | 16 |
| EMFORCE® Bio $CaCO_3$ | 14 | - | - | 14 | - | 14 |
| MULTIFLEX-MM® $CaCO_3$ | - | - | 14 | - | 14 | - |
| Flashing (1=best, 5=worst) | 2 | 5 | 1 | 3 | 1 | 2 |

In the above table, the final PHA is poly(3-hydroxybutyrate-co-4-hydroxybutyrate) with 10-12% by weight 4HB content. The "Nucleant Masterbatch 1" was cyanuric acid that had been previously compounded at a concentration of 33% (by weight) into a base resin of 3-hydroxybutanoic acid and 4-hydroxybutanoic acid, and pelleted. "Nucleant Masterbatch 2" was a slurry of 33% milled cyanuric acid in CITROFLEX® A4.

Flashing at packing pressures of 50% were compared. The first and last formulations are identical, for purposes of showing repeatability. The two different nucleant masterbatches were included to uncover any interactions between the nucleant compounding methods and the calcium carbonates. As shown by the flash ratings in the table above, the use of two different compounding techniques made no difference in the flash rating when MULTIFLEX-MM was used. However, when the calcium carbonate used was EMforce Bio, less flash was observed when the nucleant used was Masterbatch 1, which is cyanuric acid compounded into a base polymer resin.

It can clearly be seen that addition of either EMFORCE® Bio calcium carbonate or MULTIFLEX-MM® calcium carbonate reduced flash relative to the control formulation (Formulation 7-2). But MULTIFLEX-MM® calcium carbonate was consistently better than EMFORCE® Bio calcium carbonate in reducing flash, in the formulations with Nucleant Masterbatch 1 (EMFORCE® Bio calcium carbonate in Formulation 7-1 vs. MULTIFLEX-MM calcium carbonate in Formulation 7-3) and with Nucleant Masterbatch 2 (EMFORCE® Bio calcium carbonate in Formulation 7-4 vs. MULTIFLEX-MM® calcium carbonate in Formulation 7-5).

Example 9. Production and Testing of PHA Polymer Pellets, and Production of Film Containing Low and High Purity Calcium Carbonate.

Calcium carbonates can be used to increase line speed when making film, and either maintain or increase the thermal stability of the polymer during processing. For instance, one can use EMFORCE® Bio calcium carbonate, MULTIFLEX-MM® calcium carbonate, ULTRA-PFLEX® calcium carbonate or THIXO-CARB® calcium carbonate (from Specialty Minerals Inc., Bethlehem, PA, USA). These calcium carbonates tend to be purer and have a narrower particle size distribution, relative to other calcium carbonates.

Table 11. PHA formulations containing precipitated calcium carbonate.

| Formulation | 1 | 2 | 3 | 4 | 5 | 6 | 7 | 8 |
|---|---|---|---|---|---|---|---|---|
| PHA blend (wt%) | 76 | 76 | 76 | 76 | 81 | 81 | 81 | 81 |
| Nucleant Masterbatch (Wt%) | 3 | 3 | 3 | 3 | 3 | 3 | 3 | 3 |
| Slip-Antiblock Masterbatch (Wt%) | 3 | 3 | 3 | 3 | 3 | 3 | 3 | 3 |
| Peroxide (Wt%) | 0.15 | 0.15 | 0.15 | 0.15 | 0.15 | 0.15 | 0.15 | 0.15 |
| CITROFLEX® A4 (Wt%) | 7.85 | 7.85 | 7.85 | 7.85 | 7.85 | 7.85 | 7.85 | 7.85 |
| EMFORCE® Bio calcium carbonate (Wt%) | 10 | - | - | - | 5 | - | - | - |
| MULTIFLEX-MM® calcium carbonate (Wt%) | - | 10 | - | - | - | 5 | - | - |
| ULTRA-PFLEX® calcium carbonate (Wt%) | - | - | 10 | - | - | - | 5 | - |
| THIXO-CARB® 500 calcium carbonate (Wt%) | - | - | - | 10 | - | - | - | 5 |

In the above table, the final PHA is poly(3-hydroxybutyrate-co-4-hydroxybutyrate) with 10-12% by weight 4HB content. The nucleant masterbatch can be cyanuric acid compounded at a concentration of 33% (by weight) into a base

resin of 3-hydroxybutanoic acid and 4-hydroxybutanoic acid, and pelleted. The slip anti-block masterbatch can be a mixture of erucamide (20% by weight) diatomaceous earth (15% by weight) nucleant masterbatch (3% by weight), pelleted into PHA (62% by weight). The peroxide used can be Triganox T117 (Azko Nobel), which can be dissolved in the CITROFLEX® A4 plasticizer prior to being pumped into the compounding extruder.

The above blends can be produced using, *e.g.*, a 27 mm MAXX Leistritz twin-screw extruder using, for example, the following temperature profile: Ten zones set at 175 / 175 / 170 / 170 / 170 / 165 / 165 / 165 / 160 / 160°C. The extrusion concentration can be set at 85 lbs/hr and the extruder can be operated at 130 rpm.

The above blends can be processed into cast film using, for example, a 1.25 inch Killion extruder fitted with a 10-inch coathanger die with the primary casting roll heated to about 55°C. The extruder can be operated at about 35 rpm with the extruder and die zones set to 360 / 355 / 345 / 340 / 330°F.

The precipitated calcium carbonates can be used in this way to increase line speed, and maintain, or (in the case of MULTIFLEX-MM® calcium carbonate) improve the thermal stability of the polymer.

Example 10. Production and Testing of PHA Polymer Pellets, and Production of Film Containing Low and High Purity Calcium Carbonate.

Precipitated calcium carbonates can be used to increase line speed when making film, and either maintain or increase the thermal stability of the polymer during processing. For instance, one can use EMFORCE® Bio calcium carbonate, MULTIFLEX-MM® calcium carbonate, ULTRA-PFLEX® calcium carbonate or THIXO-CARB® calcium carbonate (from Specialty Minerals Inc., Bethlehem, PA, USA). Precipitated calcium carbonates tend to be purer and have a narrower particle size distribution, relative to ground calcium carbonates.

Table 12. PHA formulations containing precipitated calcium carbonate.

| Formulation | 1 | 2 | 3 | 4 | 5 | 6 | 7 | 8 |
|---|---|---|---|---|---|---|---|---|
| PHA blend (wt%) | 76 | 76 | 76 | 76 | 81 | 81 | 81 | 81 |
| Nucleant Masterbatch (Wt%) | 3 | 3 | 3 | 3 | 3 | 3 | 3 | 3 |
| Slip-Antiblock Masterbatch (Wt%) | 3 | 3 | 3 | 3 | 3 | 3 | 3 | 3 |
| Peroxide (Wt%) | 0.15 | 0.15 | 0.15 | 0.15 | 0.15 | 0.15 | 0.15 | 0.15 |
| CITROFLEX® A4 (Wt%) | 7.85 | 7.85 | 7.85 | 7.85 | 7.85 | 7.85 | 7.85 | 7.85 |
| EMFORCE Bio calcium carbonate (Wt%) | 10 | - | - | - | 5 | - | - | - |
| MULTIFLEX-MM calcium carbonate (Wt%) | - | 10 | - | - | - | 5 | - | - |
| ULTRA-PFLEX calcium carbonate (Wt%) | - | - | 10 | - | - | - | 5 | - |
| THIXO-CARB 500 calcium carbonate (Wt%) | - | - | - | 10 | - | - | - | 5 |

In the above table, the final PHA is poly(3-hydroxybutyrate-co-4-hydroxybutyrate) with 10-12% by weight 4HB content. The nucleant masterbatch can be cyanuric acid compounded at a concentration of 33% (by weight) into a base resin of 3-hydroxybutanoic acid and 4-hydroxybutanoic acid, and pelleted. The slip anti-block masterbatch can be a mixture of erucamide (20% by weight) diatomaceous earth (15% by weight) nucleant masterbatch (3% by weight), pelleted into PHA (62% by weight). The peroxide used can be Triganox T117 (Azko Nobel), which can be dissolved in the CITROFLEX® A4 plasticizer prior to being pumped into the compounding extruder.

The above blends can be produced using, *e.g.*, a 27 mm MAXX Leistritz twin-screw extruder using, for example, the following temperature profile: Ten zones set at 175 / 175 / 170 / 170 / 170 / 165 / 165 / 165 / 160 / 160°C. The extrusion concentration can be set at 85 lbs/hr and the extruder can be operated at 130 rpm.

The above blends can be processed into cast film using, for example, a 1.25 inch Killion extruder fitted with a 10-inch coathanger die with the primary casting roll heated to about 55°C. The extruder can be operated at about 35 rpm with the extruder and die zones set to 360 / 355 / 345 / 340 / 330°F.

The precipitated calcium carbonates can be used in this way to increase line speed, and maintain, or (in the case of MULTIFLEX-MM® calcium carbonate) improve the thermal stability of the polymer.

Example 11. Production and Testing of PHA Polymer Pellets, and Production of Film High Purity Calcium Carbonate.

Precipitated calcium carbonates can be used to increase line speed when making film, and either maintain or increase the thermal stability of the polymer during processing. For instance, one can use EMFORCE® Bio calcium carbonate, MULTIFLEX-MM® calcium carbonate, ULTRA-PFLEX® calcium carbonate or THIXO-CARB® calcium carbonate (from Specialty Minerals Inc., Bethlehem, PA, USA). Precipitated calcium carbonates tend to be purer and have

a narrower particle size distribution, relative to ground calcium carbonates.

Table 13. PHA formulations containing high purity calcium carbonate.

| Formulation | 1 | 2 | 3 | 4 | 5 | 6 | 7 | 8 |
|---|---|---|---|---|---|---|---|---|
| PHA blend (wt%) | 76 | 76 | 76 | 76 | 81 | 81 | 81 | 81 |
| Nucleant Masterbatch (Wt%) | 3 | 3 | 3 | 3 | 3 | 3 | 3 | 3 |
| Slip-Antiblock Masterbatch (Wt%) | 3 | 3 | 3 | 3 | 3 | 3 | 3 | 3 |
| Peroxide (Wt%) | 0.15 | 0.15 | 0.15 | 0.15 | 0.15 | 0.15 | 0.15 | 0.15 |
| CITROFLEX® A4 (Wt%) | 7.85 | 7.85 | 7.85 | 7.85 | 7.85 | 7.85 | 7.85 | 7.85 |
| EMFORCE® Bio calcium carbonate (Wt%) | 10 | - | - | - | 5 | - | - | - |
| MULTIFLEX-MM® calcium carbonate (Wt%) | - | 10 | - | - | - | 5 | - | - |
| ULTRA-PFLEX® calcium carbonate (Wt%) | - | - | 10 | - | - | - | 5 | - |
| THIXO-CARB 500 calcium carbonate (Wt%) | - | - | - | 10 | - | - | - | 5 |

In the above table, the final PHA is poly(3-hydroxybutyrate-co-4-hydroxybutyrate) with 10-12% by weight 4HB content. The slip anti-block masterbatch can be a mixture of erucamide (20% by weight) diatomaceous earth (15% by weight) nucleant masterbatch (3% by weight), pelleted into PHA (62% by weight). The peroxide used can be Triganox T117 (Azko Nobel), which can be dissolved in the CITROFLEX® A4 plasticizer prior to being pumped into the compounding extruder.

The above blends can be produced using, *e.g.*, a 27 mm MAXX Leistritz twin-screw extruder using, for example, the following temperature profile: Ten zones set at 175 / 175 / 170 / 170 / 170 / 165 / 165 / 165 / 160 / 160°C. The extrusion concentration can be set at 85 lbs/hr and the extruder can be operated at 130 rpm.

The above blends can be processed into cast film using, for example, a 1.25 inch Killion extruder fitted with a 10-inch coathanger die with the primary casting roll heated to about 55°C. The extruder can be operated at about 35 rpm with the extruder and die zones set to 360 / 355 / 345 / 340 / 330°F.

The precipitated calcium carbonates can be used in this way to increase line speed, and maintain, or (in the case of MULTIFLEX-MM® calcium carbonate improve the thermal stability of the polymer.

Example 12. Production and Testing of PHA Polymer Pellets Containing Different Levels of High Purity Calcium Carbonate.

One can also produce pellets for making film, where the pellets contain different levels of precipitated calcium carbonate. Such film formulations are shown in the table below.

Table 14. Formulations of PHA blends containing varying levels of precipitated calcium carbonate.

| Formulation | 1 | 2 | 3 | 4 | 5 |
|---|---|---|---|---|---|
| PHA Blend (Wt%) | 97 | 92 | 87 | 92 | 87 |
| Nucleant Masterbatch (Wt%) | 3 | 3 | 3 | 3 | 3 |
| MULTIFLEX-MM® calcium carbonate (Wt%) | - | 5 | 10 | - | - |
| EMFORCE® Bio calcium carbonate (Wt%) | - | - | - | 5 | 10 |

In the above table, the final PHA is poly(3-hydroxybutyrate-co-4-hydroxybutyrate) with 10-12% by weight 4HB content. The nucleant masterbatch can be cyanuric acid compounded at a concentration of 33% (by weight) into a base resin of 3-hydroxybutanoic acid and 4-hydroxybutanoic acid, and pelleted.

The above blends can be produced, *e.g.*, using a 27 mm MAXX Leistritz twin-screw extruder using, for instance, the following temperature profile: 10 zones set at 175 / 175 / 170 / 170 / 170 / 165 / 165 / 165 / 160 / 160°C. The extrusion concentration can be set at 60 lbs/hr and the extruder operated at 100 rpm.

In such formulations, EMFORCE® Bio calcium carbonate will have little negative affect on stability. However, in those formulations containing some MULTIFLEX-MM® calcium carbonate calcium carbonate, the capillary viscosity stability will change to reflect an improvement in thermal stability.

Example 13. High Purity Calcium Carbonates in Injection Molding.

Samples of precipitated and ground calcium carbonates with various particle sizes and surface treatments can

be used in injection molding formulations. These include, but are not limited to, ULTRA-PFLEX® calcium carbonate, MULTIFLEX-MM® calcium carbonate, EMFORCE ®Bio calcium carbonate, OMYACARB® 3-FL calcium carbonate, OMYACARB® UF-FL calcium carbonate, OMYACARB® UFT-FL calcium carbonate. Exemplary formulations are shown in the table below.

Table 15. Comparison of two high purity calcium carbonates.

| Formulation | 1 | 2 | 3 | 4 | 5 | 6 | 7 |
|---|---|---|---|---|---|---|---|
| PHA blend (Wt%) | 89.7 | 84.7 | 75.7 | 89.7 | 84.7 | 75.7 | 94.7 |
| Acrowax (Wt%) | 0.3 | 0.3 | 0.3 | 0.3 | 0.3 | 0.3 | 0.3 |
| CITROFLEX® A4 (Wt%) | 2.0 | 2.0 | 2.0 | 2.0 | 2.0 | 2.0 | 2.0 |
| Nucleant Masterbatch (Wt%) | 3.0 | 3.0 | 2.0 | 3.0 | 3.0 | 2.0 | 3.0 |
| MULTIFLEX-MM® calcium carbonate (Wt%) | 5.0 | 10.0 | 20.0 | - | - | - | - |
| ULTRA-PFLEX® calcium carbonate (Wt%) | | - | - | 5.0 | 10.0 | 20.0 | - |

In the above table, the final PHA is poly(3-hydroxybutyrate-co-4-hydroxybutyrate) with 10-12% by weight 4HB content. The nucleant masterbatch can be cyanuric acid previously compounded at a concentration of 33% (by weight) into a base resin of 3-hydroxybutanoic acid and 4-hydroxybutanoic acid, and pelleted.

Injection molding formulations with these calcium carbonates and other standard additives including mold release, plasticizer and nucleating agent, can be compounded, for instance, on 27 mm twin screw Leistritz extruder. A typical temperature profile of the barrel setting, from hopper to die, can be 175°C / 175°C / 175°C / 175°C / 175°C / 170°C / 170°C / 170°C / 170°C / 170°C / 170°C, with screw speed at 100 rpm and throughput at 40 lbs per hour.

Injection molding can be carried out, for example, on a Roboshot $\alpha$-50C (FANUC Ltd., Japan) with barrel volume to shot size at about 2, where the melt temperature is controlled at about 170°C by adjusting the barrel temperature setting and screw rpm. Flash can be observed by packing the mold at 50% of the peak injection pressure.

Addition of MULTIFLEX-MM® calcium carbonate up to 20% will show a steady decrease in flash; ULTRA-PFLEX® calcium carbonate should show the best decrease in flash at a concentration of about 5%.

Both calcium carbonates should also show a trend of decreasing capillary viscosity stability.

With the addition of calcium carbonate, tensile modulus may increase, but not as much as would be seen with the addition of talc.

Example 14. Various Calcium Carbonates in Injection Molding.

Samples of precipitated and ground calcium carbonates with various particle sizes and surface treatments can be used in injection molding formulations. These include, but are not limited to, ULTRA-PFLEX® calcium carbonate, MULTIFLEX-MM® calcium carbonate, EMFORCE® Bio calcium carbonate, OMYACARB® 3-FL calcium carbonate, OMYACARB® UF-FL calcium carbonate, and OMYACARB® UFT-FL calcium carbonate. Exemplary formulations are shown in the table below.

Table 16. Comparison of two high purity calcium carbonates.

| Formulation | 1 | 2 | 3 | 4 | 5 | 6 | 7 |
|---|---|---|---|---|---|---|---|
| PHA blend (Wt%) | 89.7 | 84.7 | 75.7 | 89.7 | 84.7 | 75.7 | 94.7 |
| Acrowax (Wt%) | 0.3 | 0.3 | 0.3 | 0.3 | 0.3 | 0.3 | 0.3 |
| CITROFLEX® A4 (Wt%) | 2.0 | 2.0 | 2.0 | 2.0 | 2.0 | 2.0 | 2.0 |
| Nucleant Masterbatch (Wt%) | 3.0 | 3.0 | 2.0 | 3.0 | 3.0 | 2.0 | 3.0 |
| $CaCO_3$ MULTIFLEX-MM® calcium carbonate (Wt%) | 5.0 | 10.0 | 20.0 | - | - | - | - |
| $CaCO_3$ ULTRA-PFLEX calcium carbonate (Wt%) | | - | - | 5.0 | 10.0 | 20.0 | - |

In the above table, the final PHA is poly(3-hydroxybutyrate-co-4-hydroxybutyrate) with 10-12% by weight 4HB content. The nucleant masterbatch can be cyanuric acid previously compounded at a concentration of 33% (by weight) into a base resin of 3-hydroxybutanoic acid and 4-hydroxybutanoic acid, and pelleted.

Injection molding formulations with these calcium carbonates and other standard additives including mold release, plasticizer and nucleating agent, can be compounded, for instance, on 27 mm twin screw Leistritz extruder. A typical temperature profile of the barrel setting, from hopper to die, can be 175°C / 175°C / 175°C / 175°C / 175°C / 170°C / 170°C / 170°C / 170°C / 170°C / 170°C, with screw speed at 100 rpm and throughput at 40 lbs per hour.

Injection molding can be carried out, for example, on a Roboshot α-50C (FANUC Ltd., Japan) with barrel volume to shot size at about 2, where the melt temperature is controlled at about 170°C by adjusting the barrel temperature setting and screw rpm. Flash can be observed by packing the mold at 50% of the peak injection pressure.

Addition of MULTIFLEX-MM® calcium carbonate up to 20% will show a steady decrease in flash; ULTRA-PFLEX® calcium carbonate should show the best decrease in flash at a concentration of about 5%.

Both calcium carbonates should also show a trend of decreasing capillary viscosity stability.

With the addition of calcium carbonate, tensile modulus may increase, but not as much as would be seen with the addition of talc.

Example 15. Comparison of Coated or Uncoated Calcium Carbonate in Injection Molding.

One can make reduced-flash formulations for injection molding that contain either ground or precipitated calcium carbonate, as shown in the table below.

Table 17. Formulations of coated or uncoated calcium carbonate or high purity calcium carbonate in injection molding.

| Formulation | 1 | 2 | 3 | 4 | 5 | 6 |
|---|---|---|---|---|---|---|
| PHA blend | 100 | 100 | 100 | 100 | 100 | 100 |
| Acrowax concentrate (50% in PHA) | 1 | 1 | 1 | 1 | 1 | 1 |
| CITROFLEX® A4 | 3 | 3 | 3 | 3 | 3 | 3 |
| Nucleant Masterbatch | 3.3 | 3.3 | 3.3 | 3.3 | 3.3 | 3.3 |
| $CaCO_3$ MULTIFLEX-MM® calcium carbonate | - | - | - | - | 12 | - |
| $CaCO_3$ OMYACARB® UFT-FL calcium carbonate | - | - | - | 12 | - | - |
| $CaCO_3$ OMYACARB® UF-FL calcium carbonate | - | - | 12 | - | - | - |
| $CaCO_3$ OMYACARB® 3-FL calcium carbonate | - | 12 | - | - | - | - |
| $CaCO_3$ EMFORCE® Bio calcium carbonate | 12 | - | - | - | - | - |
| Talc | 13 | 13 | 13 | 13 | 13 | 12 |

In the above table, the final PHA is poly(3-hydroxybutyrate-co-4-hydroxybutyrate) with 10-12% by weight 4HB content. The nucleant masterbatch can be cyanuric acid compounded at a concentration of 33% (by weight) into a base resin of 3-hydroxybutanoic acid and 4-hydroxybutanoic acid, and pelleted.

All calcium carbonates should have some effect in reducing flash, but MULTIFLEX-MM® should be the most effective.

By using high purity calcium carbonate, it is possible to add calcium carbonate as an additive to PHA polymer formulations and obtain the benefits of improved processing, while minimizing the harmful side effects most commonly associated with use of calcium carbonate.

Example 16. Comparison of Coated or Uncoated Calcium Carbonate in Injection Molding.

One can make reduced-flash formulations for injection molding that contain either ground or precipitated calcium carbonate, as shown in the table below.

Table 18. Formulations of coated or uncoated ground calcium carbonate or high purity in injection molding.

| Formulation | 1 | 2 | 3 | 4 | 5 | 6 |
|---|---|---|---|---|---|---|
| PHA blend | 100 | 100 | 100 | 100 | 100 | 100 |
| Acrowax concentrate (50% in PHA) | 1 | 1 | 1 | 1 | 1 | 1 |
| CITROFLEX® A4 | 3 | 3 | 3 | 3 | 3 | 3 |
| Nucleant Masterbatch | 3.3 | 3.3 | 3.3 | 3.3 | 3.3 | 3.3 |
| $CaCO_3$ MULTIFLEX-MM® calcium carbonate | - | - | - | - | 12 | - |

(continued)

| Formulation | 1 | 2 | 3 | 4 | 5 | 6 |
|---|---|---|---|---|---|---|
| $CaCO_3$ OMYACARB® UFT-FL calcium carbonate | - | - | - | 12 | - | - |
| $CaCO_3$ OMYACARB® UF-FL calcium carbonate | - | - | 12 | - | - | - |
| $CaCO_3$ OMYACARB® 3-FL calcium carbonate | - | 12 | - | - | - | - |
| $CaCO_3$ EMFORCE® Bio calcium carbonate | 12 | - | - | - | - | - |
| Talc | 13 | 13 | 13 | 13 | 13 | 12 |

In the above table, the final PHA is poly(3-hydroxybutyrate-co-4-hydroxybutyrate) with 10-12% by weight 4HB content. The nucleant masterbatch can be cyanuric acid compounded at a concentration of 33% (by weight) into a base resin of 3-hydroxybutanoic acid and 4-hydroxybutanoic acid, and pelleted.

All calcium carbonates should have some effect in reducing flash, but MULTIFLEX-MM® calcium carbonate should be the most effective.

By using precipitated calcium carbonate, it is possible to add calcium carbonate as an additive to PHA polymer formulations and obtain the benefits of improved processing, while minimizing the harmful side effects most commonly associated with use of calcium carbonate.

Example 17. Coated and Uncoated Calcium Carbonate in Injection Molding.

Injection molding formulations can also be made that take advantage of coatings on precipitated calcium carbonates. Sample formulations are listed in the table below.

Table 19. Injection Molding Formulations Containing Coated and Uncoated Calcium Carbonate.

| Formulation | 1 | 2 | 3 | 4 | 5 | 6 |
|---|---|---|---|---|---|---|
| PHA blend | 100 | 100 | 100 | 100 | 100 | 100 |
| Acrowax concentrate (50% in PHA) | 1 | 1 | 1 | 1 | 1 | 1 |
| CITROFLEX® A4 | 4 | 4 | 4 | - | - | 4 |
| Nucleant Masterbatch 1 | 6.6 | 6.6 | 6.6 | - | - | 6.6 |
| Nucleant Masterbatch 2 | - | - | - | 6 | 6 | - |
| Talc | 16 | 16 | 16 | 16 | 16 | 16 |
| EMFORCE® Bio calcium carbonate | 14 | - | - | 14 | - | 14 |
| MULTIFLEX-MM® calcium carbonate | - | - | 14 | - | 14 | - |

In the above table, the final PHA is poly(3-hydroxybutyrate-co-4-hydroxybutyrate) with 10-12% by weight 4HB content. In the above table, The "Nucleant Masterbatch 1" can be cyanuric acid compounded at a concentration of 33% (by weight) into a base resin of 3-hydroxybutanoic acid and 4-hydroxybutanoic acid, and pelleted. "Nucleant Masterbatch 2" can be a slurry of 33% milled cyanuric acid in CITROFLEX® A4.

Flashing can be compared at packing pressures of 50%. Addition of either EMFORCE® Bio calcium carbonate or MULTIFLEX-MM® calcium carbonate can be used to reduce flash.

Example 18. Coated and Uncoated Calcium Carbonate in Injection Molding.

Injection molding formulations can also be made that take advantage of coatings on precipitated calcium carbonates. Sample formulations are listed in the table below.

Table 20. Injection Molding Formulations Containing Coated and Uncoated High Purity Calcium Carbonate.

| Formulation | 1 | 2 | 3 | 4 | 5 | 6 |
|---|---|---|---|---|---|---|
| PHA blend | 100 | 100 | 100 | 100 | 100 | 100 |
| Acrowax concentrate (50% in PHA) | 1 | 1 | 1 | 1 | 1 | 1 |

(continued)

| Formulation | 1 | 2 | 3 | 4 | 5 | 6 |
|---|---|---|---|---|---|---|
| CITROFLEX® A4 | 4 | 4 | 4 | - | - | 4 |
| Nucleant Masterbatch 1 | 6.6 | 6.6 | 6.6 | - | - | 6.6 |
| Nucleant Masterbatch 2 | - | - | - | 6 | 6 | - |
| Talc | 16 | 16 | 16 | 16 | 16 | 16 |
| EMFORCE® Bio | 14 | - | - | 14 | - | 14 |
| calcium carbonate | | | | | | |
| MULTIFLEX-MM® calcium carbonate | - | - | 14 | - | 14 | - |

In the above table, the final PHA is poly(3-hydroxybutyrate-co-4-hydroxybutyrate) with 10-12% by weight 4HB content. The "Nucleant Masterbatch 1" can be cyanuric acid compounded at a concentration of 33% (by weight) into a base resin of 3-hydroxybutanoic acid and 4-hydroxybutanoic acid, and pelleted. "Nucleant Masterbatch 2" can be a slurry of 33% milled cyanuric acid in CITROFLEX® A4.

Flashing can be compared at packing pressures of 50%. Addition of either EMFORCE® Bio or MULTIFLEX-MM® can be used to reduce flash.

Example 19. Production and Testing of PHA Polymer Pellets, and Production of Film Containing Calcium Carbonate.

In this example, EMFORCE Bio® calcium carbonate is used.

Table 21. PHA formulations containing high purity calcium carbonates.

| Formulation | 1 | 2 |
|---|---|---|
| PHA Blend (wt%) | 78 | 78 |
| Nucleant Masterbatch (wt%) | 3 | 3 |
| Slip-Antiblock Masterbatch (Wt%) | 4 | 4 |
| CITROFLEX® A4 (wt%) | 4.8 | 4.8 |
| Paraplex A-8600 (wt%) | 4.8 | 4.8 |
| Peroxide (wt%) | 0.2 | 0.2 |
| Co-agent (wt%) | 0.2 | 0.2 |
| EMFORCE Bio calcium carbonate (wt%) | 5 | 0 |
| *BLEND DATA* | | |
| G' @ 0.25 rad/s (Pa) | 982 | 1276 |
| Eta* @ 0.25 rad/s (Pa.s) | 9996 | 11710 |
| Capillary Viscosity Stability | - 0.072 | - 0.065 |
| Viscosity @ 100 s-1 & 5 , (pa.s) | 1451 | 1454 |
| *BLOWN FILM DATA* | | |
| Min. Thickness before Blocking (mils) | 2.1 | 1.4 |
| MD Tear (g/mil) | 22 | 26 |
| MD Tensile Strength (MPa) | 22.7 | 23.1 |

In the above table, the final PHA is poly(3-hydroxybutyrate-co-4-hydroxybutyrate) with 10-12% by weight 4HB content. The nucleating masterbatch was cyanuric acid that had been previously compounded at a concentration of 33% (by weight) into a base resin of 3-hydroxybutanoic acid and 4-hydroxybutanoic acid, and pelleted. The slip anti-block masterbatch was a mixture of erucamide (20% by weight) diatomaceous earth (15% by weight) nucleant masterbatch (3% by weight), pelleted into PHA (62% by weight). The peroxide was Triganox 131, and the co-agent was pentaerythritol triacrylate.

The blends were produced using a using a 26 mm Leistritx MAXX co-rotating twin-screw extruder, operated at 130 rpm, and 85 lbs/hr. The pressure and melt temperature to formulation 1 was ~2120 psi and 190C, for formulation 2, ~2239 psi and 196C.

The G', Eta*, capillary viscosity stability, and viscosity were measured, and the results are shown in the table

above.

Blown films were made on a 1.5 inch Killion single-screw extruder fitted with a 2.5 inch spiral mandrel blown film die. The settings on the extruder were 174 / 171 / 168 C and 169 C die temperature; 40 rpm concentration. 2 mil film was made at ~2.3 blow-up ratio. The properties of the resulting films were measured and are shown in the table above.

Example 20. Production and Testing of PHA Polymer Formulations Containing Low and High Purity Calcium Carbonate.

In this example, different types of calcium carbonates were blended with different types of PHA polymers, and the effects were measured. A PHA blend as used in a number of the previous examples was compared to two types of PHBV (poly(3-hydroxybutyrate-co-3-hydroxyvalerate). The formulations contained either no calcium carbonate (control), OMYACARB® 3-FL calcium carbonate (a raw, ground, unpurified calcium carbonate; control), or EMFORCE® Bio calcium carbonate (a calcium carbonate purified by precipitation). The formulations made are set out in the table below.

Table 22. PHA blend formulations containing high purity calcium carbonates.

| Formulation | 1 | 2 | 3 | 4 |
|---|---|---|---|---|
| PHA Blend (wt%) | 92 | 82 | 82 | 82 |
| Nucleant Masterbatch (wt%) | 3 | 3 | 3 | 3 |
| CITROFLEX® A4 (wt%) | 4.8 | 4.8 | 4.8 | 4.8 |
| Peroxide (wt%) | 0.2 | 0.2 | 0.2 | 0.2 |
| OMYACARB 3-FL calcium carbonate (wt%) | 0 | 10 | 0 | 0 |
| EMFORCE Bio calcium carbonate (wt%) | 0 | 0 | 10 | 0 |
| *RESULTS* | | | | |
| Eta* @ 0.25 rad/s (Pa.s) | 7833 | 7776 | 11910 | 10750 |
| G' @ 0.25 rad/s (Pa) | 598 | 651 | 1223 | 1055 |
| Capillary Stability | - 0.069 | - 0.125 | - 0.098 | - 0.074 |
| Tmc (°C) | 104.1 | 103.9 | 103.5 | 102.8 |

In the above table, the final PHA is poly(3-hydroxybutyrate-co-4-hydroxybutyrate) with 10-12% by weight 4HB content.

Table 23. PHBV formulations containing high purity calcium carbonates. (reference example)

| Formulation | 1 | 2 | 3 | 4 |
|---|---|---|---|---|
| PHBV (wt%) | 92 | 82 | 82 | 82 |
| Nucleant Masterbatch (wt%) | 3 | 3 | 3 | 3 |
| Citroflex A4 (wt%) | 4.8 | 4.8 | 4.8 | 4.8 |
| Peroxide (wt%) | 0.2 | 0.2 | 0.2 | 0.2 |
| OMYACARB 3-FL calcium carbonate (wt%) | 0 | 10 | 0 | 0 |
| EMFORCE Bio calcium carbonate (wt%) | 0 | 0 | 10 | 0 |
| *RESULTS* | | | | |
| Eta* @ 0.25 rad/s (Pa.s) | 554 | 272 | 350 | 564 |
| G' @ 0.25 rad/s (Pa) | 2 | 1 | 5 | 3 |
| Capillary Stability | - 0.087 | - 0.145 | - 0.122 | -0.108 |
| Tmc (°C) | 101.2 | 100.9 | 100.9 | 100.9 |

The PHBV with 21 % by weight HV content in the above table was previously compounded with nucleating agent and plasticizer.

Table 24. PHBV formulations containing high purity calcium carbonates. (reference example)

| Formulation | 1 | 2 | 3 | 4 |
|---|---|---|---|---|
| PHBV (wt%) | 92 | 82 | 82 | 82 |

(continued)

| Formulation | 1 | 2 | 3 | 4 |
|---|---|---|---|---|
| Nucleant Masterbatch (wt%) | 3 | 3 | 3 | 3 |
| CITROFLEX® A4 (wt%) | 4.8 | 4.8 | 4.8 | 4.8 |
| Peroxide (wt%) | 0.2 | 0.2 | 0.2 | 0.2 |
| OMYACARB® 3-FL calcium carbonate (wt%) | 0 | 10 | 0 | 0 |
| EMFORCE® Bio calcium carbonate (wt%) | 0 | 0 | 10 | 0 |
| *RESULTS* | | | | |
| Eta* @ 0.25 rad/s (Pa.s) | 6716 | 2395 | 3460 | 5372 |
| G' @ 0.25 rad/s (Pa) | 533 | 103 | 130 | 300 |
| Capillary Stability | - 0.091 | - 0.127 | -0.116 | - 0.101 |
| Tmc (°C) | 100.3 | 100.3 | 99.5 | 100.4 |

The PHBV in the above table contain about 21% HV content.

In all three tables, the nucleating masterbatch was cyanuric acid that had been previously compounded at a concentration of 33% (by weight) into a base resin of 3-hydroxybutanoic acid and 4-hydroxybutanoic acid, and pelleted. The peroxide was Triganox 131.

All of the formulation in this example were made using a 16mm PRISM benchtop co-rotating twin-screw extruder with the zones set at 175 / 175 / 175 / 170 / 170 / 165 / 165 / 160 / 160 (°C). The screw speed was 200 rpm for all blends. The melt temperature was between 351-360°F for the blends.

The G', Eta*, capillary stability, and Tmc (°C) were measured, and the results are shown in the tables above.

For all three polymers, the melt capillary stability was worse with the low purity calcium carbonate (OMYACARB® 3-FL calcium carbonate) than either of the refined calcium carbonates. The low-shear viscosity (Eta*) and the melt elasticity (G') were higher with the high purity calcium carbonates, across all three polymers.

At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains error necessarily resulting from the standard deviation found in its underlying respective testing measurements. Furthermore, when numerical ranges are set forth herein, these ranges are inclusive of the recited range end points (*i.e.*, end points may be used). When percentages by weight are used herein, the numerical values reported are relative to the total weight.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a "maximum value of equal to or less than 10. The terms "one," "a," or "an" as used herein are intended to include "at least one" or "one or more," unless otherwise indicated.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In addition, the materials, methods, and examples are illustrative only and not intended to be limiting.

While this invention has been particularly shown and described with references to preferred embodiments thereof, it will be understood by those skilled in the art that various changes in form and details may be made therein without departing from the scope of the invention encompassed by the appended claims.

## Claims

1. A method for producing a poly(3-hydroxybutyrate-co-4-hydroxybutyrate) polyhydroxyalkanoate article, comprising the steps of:

   a.) combining a poly(3-hydroxybutyrate-co-4-hydroxybutyrate) polyhydroxyalkanoate polymer article formulation and a high purity calcium carbonate; and

b.) producing a poly(3-hydroxybutyrate-co-4-hydroxybutyrate) polyhydroxyalkanoate article containing high purity calcium carbonate,
wherein the high purity calcium carbonate has the following characteristics:

an average particle size of less than or equal to three microns;
a total trace metal content of less than 5000 ppm;
a magnesium content of less than 2500 ppm; and
an iron content of less than 500 ppm.

**2.** The method of Claim 1, where the high purity calcium carbonate is selected from the group consisting of EMFORCE Bio® calcium carbonate and MULTIFLEX-MM® calcium carbonate.

**3.** The method of Claim 1 or Claim 2, wherein the article is selected from the group consisting of: a film, a sheet, a fiber, an injection molded article, a thermoformed article, a blow molded article and a foamed article.

**4.** The method of Claim 1, wherein the high purity calcium carbonate is added at a concentration of 3% to 40% by weight of the polyhydroxyalkanoate polymer article formulation, at a concentration of 5% to 20% by weight of the polyhydroxyalkanoate polymer article formulation, at a concentration of 5% by weight of the polyhydroxyalkanoate polymer article formulation, at a concentration of 10% by weight of the polyhydroxyalkanoate polymer article formulation, at a concentration of 15% by weight of the polyhydroxyalkanoate polymer article formulation, at a concentration of 20% by weight of the polyhydroxyalkanoate polymer article formulation or at a concentration of 25% by weight of the polyhydroxyalkanoate polymer article formulation.

**5.** The method of anyone of Claims 1 to 4, further comprising the step of reducing the amount of at least one trace metal in the calcium carbonate prior to combining with the polyhydroxyalkanoate polymer article formulation.

**6.** The method of anyone of Claims 1 to 5, wherein the polyhydroxyalkanoate polymer is branched.

**7.** The method of anyone of Claims 1 to 6, wherein the method additionally comprises providing and combining a nucleant.

**8.** The method of Claim 7, wherein the nucleating agent is selected from the group consisting of: cyanuric acid, carbon black, mica talc, silica, boron nitride, clay, synthesized silicic acid and salts, metal salts of organophosphates, and kaolin.

**9.** The method of Claim 8, wherein the nucleating agent is cyanuric acid or boron nitride.

**10.** The method of any one of Claims 1 to 9, wherein the method additionally comprises providing and combining a plasticizer.

**11.** The method of Claim 10 wherein the plasticizer is CITROFLEX® A4.

**12.** The method of anyone of Claims 1 to 11, wherein the method additionally comprises providing and combining one or more additional polymers, which are not polyhydroxyalkanoates.

**13.** The method of Claim 12, wherein the additional polymer is a biodegradable aromaticaliphatic polyester.

**14.** The method of Claim 13, wherein the biodegradable aromatic-aliphatic polyester is selected from the group consisting of polybutylene adipate-terephthalate, polybutylene succinate, polybutylene succinate adipate, polyethylene terephthalate, polybutylene adipate/terephthalate, and polymethylene adipate/terephthalate.

**15.** A composition comprising: a poly(3-hydroxybutyrate-co-4-hydroxybutyrate) polyhydroxyalkanoate polymer and a high purity calcium carbonate as defined in Claim 1 or Claim 2.

**16.** The composition of Claim 15, wherein the high purity calcium carbonate is added at a concentration of 3% to 50% by weight of the composition, at a concentration of 3% to 40% by weight of the composition, at a concentration of 5% to 40% by weight of the composition, at a concentration of 5% to 20% by weight of the composition, at a concentration of 5% by weight of the composition, at a concentration of 10% by weight of the composition, at a

concentration of 15% by weight of the composition, at a concentration of 20% by weight of the composition, or at a concentration of 25% by weight of the composition.

17. The composition of Claim 15 or Claim 16, optionally comprising one or more additives selected from the group consisting of: a nucleating agent, a plasticizer, a lubricant, a branching agent, a stabilizer, a pigment, an opacifier, a filler, a reinforcing agent, and a mold release agent.

18. The method of Claim 1, wherein the method additionally comprises combining one or more additives selected from the group consisting of: a nucleant, a plasticizer, a lubricant, a branching agent, a stabilizer, a pigment, an opacifier, a filler, a reinforcing agent, and a mold release agent.

19. A pellet, comprising:

a poly(3-hydroxybutyrate-co-4-hydroxybutyrate) polymer; and
a high purity calcium carbonate as defined in Claim 1 or Claim 2.

20. The pellet of Claim 19, wherein the high purity calcium carbonate is added at a concentration of 3% to 50% by weight of the composition, at a concentration of 3% to 40% by weight of the composition, at a concentration of 5% to 40% by weight of the composition, at a concentration of 5% to 20% by weight of the composition, at a concentration of 5% by weight of the composition, at a concentration of 10% by weight of the composition, at a concentration of 15% by weight of the composition, at a concentration of 20% by weight of the composition, or at a concentration of 25% by weight of the com position.

21. The pellet of Claim 19 or Claim 20, optionally comprising one or more additives selected from the group consisting of: a nucleating agent, a plasticizer, a lubricant, a branching agent, a stabilizer, a pigment, an opacifier, a filler, a reinforcing agent, a mold release agent.

## Patentansprüche

1. Ein Verfahren zum Herstellen eines Poly(3-hydroxybutyrat-co-4-hydroxybutyrat) polyhydroxyalkanoat-Artikels mit den Schritten:

a.) Kombinieren einer Poly(3-hydroxybutyrat-co-4-hydroxybutyrat)polyhydroxyalkanoat-Polymerartikelformulierung und eines hochreinen Kalziumkarbonats; und
b.) Produzieren eines Poly(3-hydroxybutyrat-co-4-hydroxybutyrat)polyhydroxyalkanoat-Artikels, der das hochreine Kalziumkarbonat enthält, wobei das hochreine Kalziumkarbonat die folgenden Eigenschaften aufweist:

eine mittlere Teilchengröße von kleiner oder gleich drei Mikrometer;
einen Gesamtspurenmetallgehalt von weniger als 5000 ppm;
einen Magnesiumgehalt von weniger als 2500 ppm; und
einen Eisengehalt von weniger als 500 ppm.

2. Das Verfahren nach Anspruch 1, wobei das hochreine Kalziumkarbonat ausgewählt ist aus der Gruppe bestehend aus EMFORCE Bio®-Kalziumkarbonat und MULTIFLEX-MM®-Kalziumkarbonat.

3. Das Verfahren nach Anspruch 1 oder 2, wobei der Artikel ausgewählt ist aus der Gruppe bestehend aus: einer Folie, einer Bahn, einer Faser, einem Spritzgussartikel, einem warmgeformten Artikel, einem geblasenen Artikel und einem geschäumten Artikel.

4. Das Verfahren nach Anspruch 1, wobei das hochreine Kalziumkarbonat in einer Konzentration von 3 bis 40 Gewichts-% der Polyhydroxyalkanoat-Polymerartikelformulierung, in einer Konzentration von 5 bis 20 Gewichts-% der Polyhydroxyalkanoat-Polymerartikelformulierung, in einer Konzentration von 5 Gewichts-% der Polyhydroxyalkanoat-Polymerartikelformulierung, in einer Konzentration von 10 Gewichts-% der Polyhydroxyalkanoat-Polymerartikelformulierung, in einer Konzentration von 15 Gewichts-% der Polyhydroxyalkanoat-Polymerartikelformulierung, in einer Konzentration von 20 Gewichts-% der Polyhydroxyalkanoat-Polymerartikelformulierung oder in einer Konzentration von 25 Gewichts-% der Polyhydroxyalkanoat-Polymerartikelformulierung zugegeben wird.

5. Das Verfahren nach einem der Ansprüche 1 bis 4, das weiterhin den Schritt des Reduzierens der Menge des mindestens einen Spurenmetalls in dem Kalziumkarbonat vor dem Kombinieren mit der Polyhydroxyalkanoat-Polymerartikelformulierung aufweist.

6. Das Verfahren nach einem der Ansprüche 1 bis 5, wobei das Polyhydroxyalkanoat-Polymer verzweigt ist.

7. Das Verfahren nach einem der Ansprüche 1 bis 6, wobei das Verfahren zusätzlich das Bereitstellen und Kombinieren eines Keimbildners aufweist.

8. Das Verfahren nach Anspruch 7, wobei der Keimbildner ausgewählt ist aus der Gruppe bestehen aus: Cyanursäure, Kohlenschwarz, Glimmertalkum, Kieselerde, Bornitrid, Ton, synthetisierter Kieselsäure und -salze, Metallsalze von Organophosphaten und Kaolin.

9. Das Verfahren nach Anspruch 8, wobei der Keimbildner Cyanursäure oder Bornitrid ist.

10. Das Verfahren nach einem der Ansprüche 1 bis 9, wobei das Verfahren zusätzlich das Bereitstellen und Kombinieren eines Plastifizierers aufweist.

11. Das Verfahren nach Anspruch 10, wobei der Plastifizierer CITROFLEX® A4 ist.

12. Das Verfahren nach einem der Ansprüche 1 bis 11, wobei das Verfahren zusätzlich das Bereitstellen und Kombinieren eines oder mehrerer zusätzlicher Polymere aufweist, die keine Polyhydroxyalkanoate sind.

13. Das Verfahren nach Anspruch 12, wobei das zusätzliche Polymer ein biologisch abbaubarer aliphatischer aromatischer Polyester ist.

14. Das Verfahren nach Anspruch 13, wobei der biologisch abbaubare aliphatische aromatische Polyester ausgewählt ist aus der Gruppe bestehend aus Polybutylen-Adipat-Terephthalat, Polybutylen-Sukzinat, Polybutylen-Sukzinat-Adipat, Polyethylen-Terephthalat, Polybutylen-Adipat/Terephthalat und Polymethyline-Adipat/Terephthalat.

15. Eine Zusammensetzung mit: einem Poly(3-hydroxybutyrat-co-4-hydroxybutyrat) polyhydroxyalkanoat-Polymer und einem hochreinen Kalziumkarbonat wie in Anspruch 1 oder 2 definiert.

16. Die Zusammensetzung nach Anspruch 15, wobei das hochreine Kalziumkarbonat zugesetzt ist in einer Konzentration von 3 bis 50 Gewichts-% der Zusammensetzung, in einer Konzentration von 3 bis 40 Gewichts-% der Zusammensetzung, in einer Konzentration von 5 bis 40 Gewichts-% der Zusammensetzung, in einer Konzentration von 5 bis 20 Gewichts-% der Zusammensetzung, in einer Konzentration von 5 Gewichts-% der Zusammensetzung, in einer Konzentration von 10 Gewichts-% der Zusammensetzung, in einer Konzentration von 15 Gewichts-% der Zusammensetzung, in einer Konzentration von 20 Gewichts-% der Zusammensetzung oder in einer Konzentration von 25 Gewichts-% der Zusammensetzung.

17. Die Zusammensetzung nach Anspruch 15 oder 16, optional mit einem mehreren Additiven ausgewählt aus der Gruppe bestehend aus: einem Keimbildner, einem Plastifizierer, einem Schmiermittel, einem Verzweigungsmittel, einem Stabilisator, einem Pigment, einem opazitätserhöhenden Mittel, einem Füllstoff, einem Verstärkungsmittel und einem Formtrennmittel.

18. Das Verfahren nach Anspruch 1, wobei das Verfahren zusätzlich das Kombinieren eines oder mehrerer Additive aufweist, die ausgewählt sind aus der Gruppe bestehend aus: einem Keimbildner, einem Plastifizierer, einem Schmiermittel, einem Verzweigungsmittel, einem Stabilisator, einem Pigment, einem opazitätserhöhenden Mittel, einem Füllstoff, einem Verstärkungsmittel und einem Formtrennmittel.

19. Ein Pellet mit:

einem Poly(3-hydroxybutyrat-co-4-hydroxybutyrat)-Polymer; und
einem hochreinen Kalziumkarbonat wie in Anspruch 1 oder 2 definiert.

20. Das Pellet nach Anspruch 19, wobei das hochreine Kalziumkarbonat zugesetzt ist in einer Konzentration von 3 bis 50 Gewichts-% der Zusammensetzung, in einer Konzentration von 3 bis 40 Gewichts-% der Zusammensetzung, in

einer Konzentration von 5 bis 40 Gewichts-% der Zusammensetzung, in einer Konzentration von 5 bis 20 Gewichts-% der Zusammensetzung, in einer Konzentration von 5 Gewichts-% der Zusammensetzung, in einer Konzentration von 10 Gewichts-% der Zusammensetzung, in einer Konzentration von 15 Gewichts-% der Zusammensetzung, in einer Konzentration von 20 Gewichts-% der Zusammensetzung oder in einer Konzentration von 25 Gewichts-% der Zusammensetzung.

**21.** Das Pellet nach Anspruch 19 oder 20, optional mit einem oder mehreren Additiven ausgewählt aus der Gruppe bestehend aus: einem Keimbildner, einem Plastifizierer, einem Schmiermittel, einem Verzweigungsmittel, einem Stabilisator, einem Pigment, einem opazitätserhöhenden Mittel, einem Füllstoff, einem Verstärkungsmittel und einem Formtrennmittel.

**Revendications**

**1.** Procédé pour produire un article en poly(3-hydroxybutyrate-co-4-hydroxybutyrate) polyhydroxy-alcanoate, comprenant les étapes consistant :

a.) à combiner une formulation d'article en polymère de poly(3-hydroxybutyrate-co-4-hydroxybutyrate) polyhydroxyalcanoate et un carbonate de calcium de haute pureté ; et
b.) à produire un article en poly(3-hydroxy-butyrate-co-4-hydroxybutyrate) polyhydroxyalcanoate contenant du carbonate de calcium de haute pureté,
dans lequel le carbonate de calcium de haute pureté a les caractéristiques suivantes :

une taille moyenne de particule inférieure ou égale à trois micromètres ;
une teneur totale en métal à l'état de trace inférieure à 5000 ppm ;
une teneur en magnésium inférieure à 2500 ppm ; et
une teneur en fer inférieure à 500 ppm.

**2.** Procédé selon la revendication 1, dans lequel le carbonate de calcium de haute pureté est choisi dans le groupe constitué par le carbonate de calcium EMFORCE Bio® et le carbonate de calcium MULTIFLEX-MM®.

**3.** Procédé selon la revendication 1 ou la revendication 2, dans lequel l'article est choisi dans le groupe constitué par : une pellicule, une feuille, une fibre, un article moulé par injection, un article thermoformé, un article moulé par soufflage et un article expansé.

**4.** Procédé selon la revendication 1, dans lequel le carbonate de calcium de haute pureté est ajouté à une concentration de 3 % à 40 % en poids de la formulation d'article en polymère de polyhydroxy-alcanoate, à une concentration de 5 % à 20 % en poids de la formulation d'article en polymère de polyhydroxy-alcanoate, à une concentration de 5 % en poids de la formulation d'article en polymère de polyhydroxy-alcanoate, à une concentration de 10 % en poids de la formulation d'article en polymère de polyhydroxy-alcanoate, à une concentration de 15 % en poids de la formulation d'article en polymère de polyhydroxy-alcanoate, à une concentration de 20 % en poids de la formulation d'article en polymère de polyhydroxy-alcanoate ou à une concentration de 25 % en poids de la formulation d'article en polymère de polyhydroxy-alcanoate.

**5.** Procédé selon l'une quelconque des revendications 1 à 4, comprenant en outre l'étape consistant à réduire la quantité d'au moins un métal à l'état de trace dans le carbonate de calcium avant de le combiner avec la formulation d'article en polymère de polyhydroxyalcanoate.

**6.** Procédé selon l'une quelconque des revendications 1 à 5, dans lequel le polymère de polyhydroxyalcanoate est ramifié.

**7.** Procédé selon l'une quelconque des revendications 1 à 6, lequel procédé comprend de plus la fourniture et la combinaison d'un agent de nucléation.

**8.** Procédé selon la revendication 7, dans lequel l'agent de nucléation est choisi dans le groupe constitué par : l'acide cyanurique, le noir de carbone, le mica, le talc, la silice, le nitrure de bore, l'argile, l'acide silicique synthétisé et sels, les sels métalliques d'organophosphates, et le kaolin.

**9.** Procédé selon la revendication 8, dans lequel l'agent de nucléation est l'acide cyanurique ou le nitrure de bore.

**10.** Procédé selon l'une quelconque des revendications 1 à 9, dans lequel le procédé comprend de plus la fourniture et la combinaison d'un plastifiant.

**11.** Procédé selon la revendication 10, dans lequel le plastifiant est le CITROFLEX® A4.

**12.** Procédé selon l'une quelconque des revendications 1 à 11, lequel procédé comprend de plus la fourniture et la combinaison d'un ou plusieurs polymères supplémentaires, qui ne sont pas des polyhydroxyalcanoates.

**13.** Procédé selon la revendication 12, dans lequel le polymère supplémentaire est un polyester aromatique-aliphatique biodégradable.

**14.** Procédé selon la revendication 13, dans lequel le polymère aromatique-aliphatique biodégradable est choisi dans le groupe constitué par un polyadipate-téréphtalate de butylène, un polysuccinate de butylène, un polysuccinate adipate de butylène, un polytéréphtalate d'éthylène, un polyadipate/téréphtalate de butylène et un polyadipate/téréphtalate de méthylène.

**15.** Composition comprenant : un polymère de poly(3-hydroxybutyrate-co-4-hydroxybutyrate) polyhydroxy-alcanoate et un carbonate de calcium de haute pureté tel que défini dans la revendication 1 ou la revendication 2.

**16.** Composition selon la revendication 15, dans laquelle le carbonate de calcium de haute pureté est ajouté à une concentration de 3 % à 50 % en poids de la composition, à une concentration de 3 % à 40 % en poids de la composition, à une concentration de 5 % à 40 % en poids de la composition, à une concentration de 5 % à 20 % en poids de la composition, à une concentration de 5 % en poids de la composition, à une concentration de 10 % en poids de la composition, à une concentration de 15 % en poids de la composition, à une concentration de 20 % en poids de la composition ou à une concentration de 25 % en poids de la composition.

**17.** Composition selon la revendication 15 ou la revendication 16, comprenant facultativement un ou plusieurs additifs choisis dans le groupe constitué par : un agent de nucléation, un plastifiant, un lubrifiant, un agent de ramification, un stabilisant, un pigment, un opacifiant, une charge, un agent renforçant et un agent de démoulage.

**18.** Procédé selon la revendication 1, lequel procédé comprend de plus la combinaison d'un ou plusieurs additifs choisis dans le groupe constitué par : un agent de nucléation, un plastifiant, un lubrifiant, un agent de ramification, un stabilisant, un pigment, un opacifiant, une charge, un agent renforçant et un agent de démoulage.

**19.** Granule, comprenant :

un polymère de poly(3-hydroxybutyrate-co-4-hydroxybutyrate) ; et
un carbonate de calcium de haute pureté tel que défini dans la revendication 1 ou la revendication 2.

**20.** Granule selon la revendication 19, dans lequel le carbonate de calcium de haute pureté est ajouté à une concentration de 3 % à 50 % en poids de la composition, à une concentration de 3 % à 40 % en poids de la composition, à une concentration de 5 % à 40 % en poids de la composition, à une concentration de 5 % à 20 % en poids de la composition, à une concentration de 5 % en poids de la composition, à une concentration de 10 % en poids de la composition, à une concentration de 15 % en poids de la composition, à une concentration de 20 % en poids de la composition ou à une concentration de 25 % en poids de la composition.

**21.** Granule selon la revendication 19 ou la revendication 20, comprenant facultativement un ou plusieurs additifs choisis dans le groupe constitué par : un agent de nucléation, un plastifiant, un lubrifiant, un agent de ramification, un stabilisant, un pigment, un opacifiant, une charge, un agent renforçant, un agent de démoulage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61166950 A
- US 4477654 A, Holmes
- WO 0208428 A, Skraly and Sholl
- US 61050896 A
- WO 2009137058 A
- US 6984694 B, Blasius
- US 5723730 A
- US 5693389 A
- US 5973100 A
- US 6620869 B
- US 7208535 B
- US 6025028 A
- US 20050209377 A1, Padwa
- WO 2009129499 A, Whitehouse
- US 20050209377 A, Allen Padwa
- US 2009041023 W
- US 2531440 A
- US 6699320 B
- US 6414070 B, Kausch
- WO 0066657 A
- WO 0068312 A
- WO 2010008445 A
- US 09069444 W


### Non-patent literature cited in the description


- **Y. DOI.** Microbial Polyesters. VCH Publishers, 1990
- **D. H. MELIK ; L. A. SCHECHTMAN.** *Polymer Engineering and Science,* 1995, vol. 35, 1795
- **BRAUNEGG et al.** *J. Biotechnology,* 1998, vol. 65, 127-161
- **MADISON ; HUISMAN.** *Microbiology and Molecular Biology Reviews,* 1999, vol. 63, 21-53
- **POIRIER.** *Progress in Lipid Research,* 2002, vol. 41, 131-155
- **WILLIAMS ; PEOPLES.** *CHEMTECH,* 1996, vol. 26, 38-44
- **STEINBÜCHEL ; VALENTIN.** *FEMS Microbiol. Lett.,* 1995, vol. 128, 219-228
- **LEE et al.** *Biotechnology and Bioengineering,* 2000, vol. 67, 240-244
- **PARK et al.** *Biomacromolecules,* 2001, vol. 2, 248-254
- **MATSUSAKI et al.** *Biomacromolecules,* 2000, vol. 1, 17-22
- Plastics Additives Database. Plastics Design Library, 2004